(19) Europäisches Patentamt
European Patent Office
Office européen des brevets

(11) EP 2 476 314 A1

(12) EUROPEAN PATENT APPLICATION
published in accordance with Art. 153(4) EPC

(43) Date of publication:
**18.07.2012 Bulletin 2012/29**

(21) Application number: **10813838.9**

(22) Date of filing: **07.09.2010**

(51) Int Cl.:
*A01N 59/16* (2006.01) *A01N 37/40* (2006.01)
*A01N 37/44* (2006.01) *A01N 41/04* (2006.01)
*A01N 59/00* (2006.01) *A01N 59/20* (2006.01)
*A01P 3/00* (2006.01) *C11D 7/10* (2006.01)
*C11D 7/18* (2006.01) *C11D 7/26* (2006.01)
*C11D 7/32* (2006.01) *C11D 7/34* (2006.01)

(86) International application number:
**PCT/JP2010/065292**

(87) International publication number:
**WO 2011/027892 (10.03.2011 Gazette 2011/10)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **07.09.2009 JP 2009205912**
**16.07.2010 JP 2010161754**
**03.09.2010 JP 2010197580**
**03.09.2010 JP 2010197581**

(71) Applicant: **Lion Corporation**
**Tokyo 130-8644 (JP)**

(72) Inventors:
- **IWASA Yukiko**
  **Tokyo 130-8644 (JP)**
- **KUBOZONO Takayasu**
  **Tokyo 130-8644 (JP)**
- **SUEKUNI Tomonari**
  **Tokyo 130-8644 (JP)**
- **MAJIMA Toshiaki**
  **Tokyo 130-8644 (JP)**
- **KONO Yosuke**
  **Tokyo 130-8644 (JP)**

(74) Representative: **Denjean, Eric et al**
**Cabinet Laurent et Charras**
**20, rue Louis Chirpaz**
**B.P. 32**
**F-69131 Ecully Cedex (FR)**

# (54) DISINFECTANT COMPOSITION AND DISINFECTING METHOD

(57) The present invention relates to a disinfectant composition containing the following components (A) to (D): component (A): a zinc compound, component (B): a chelate compound represented by the following general formula (b1) or (b2), component (C): hydrogen peroxide or a peroxide that releases hydrogen peroxide in water, and component (D): an organic peroxy acid precursor that generates an organic peroxy acid by reacting with the component (C). According to the present invention, a disinfectant composition and a disinfecting method can be provided that enable the effective elimination of gram negative bacteria adhered to textile products, and particularly cotton products.

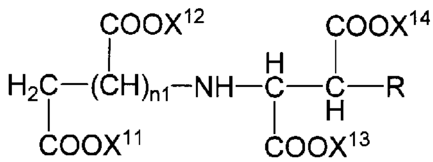

··· (b 1)

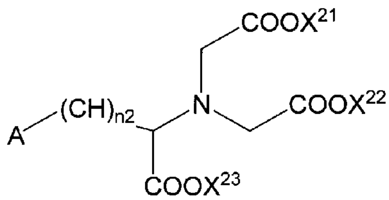

··· (b 2)

EP 2 476 314 A1

## Description

### TECHNICAL FIELD

The present invention relates to a disinfectant composition and a disinfecting method.
The present application claims priority on the basis of Japanese Patent Application No. 2009-205912 filed in Japan on September 7, 2009, Japanese Patent Application No. 2010-161754 filed in Japan on July 16, 2010, Japanese Patent Application No. 2010-197580 filed in Japan on September 3, 2010, and Japanese Patent Application No. 2010-197581 filed in Japan on September 3, 2010, the contents of which are incorporated herein by reference.

### BACKGROUND ART

There is a strong desire for disinfecting effects in the field of clothes washing based on a growing sanitary preferences in recent years. Peroxides such as sodium percarbonate that release hydrogen peroxide in water are typically incorporated in laundry detergents as disinfecting components. However, adequate disinfection may not be possible only with the hydrogen peroxide released from peroxides. Disinfection is susceptible to being inadequate particularly at low temperatures.
In response to this problem, the combined use of organic peroxy acid precursors exemplified by sodium 4-dodecanoyloxybenzenesulfonate has been carried out for the purpose of improving disinfecting strength. Organic peroxy acid precursors demonstrate extremely superior disinfecting effects against gram positive bacteria such as Staphylococcus aureus. On the other hand, they have the shortcoming of not allowing the obtaining of adequate effects against gram negative bacteria such as Escherichia coli. In addition, since organic peroxy acid precursors lose activity due to the formation of dimers when their concentration is increased, they also have the shortcoming of preventing improvement of disinfecting effects even if the incorporated amount thereof is increased.
In response to this problem, Patent Documents 1 to 3 describe that a copper complex having a specific ligand promotes an oxidation reaction by hydrogen peroxide, and that this copper complex demonstrates superior bactericidal and disinfecting effects against gram negative bacteria. In addition, Patent Document 4 describes an example in which effects are demonstrated against both gram negative bacteria and gram positive bacteria by combining the use of a copper complex having a specific ligand with an organic peroxy acid precursor.

[Prior Art Documents]

[Patent Documents]

[Patent Document 1] Japanese Unexamined Patent Application, First Publication No. 2009-148682
[Patent Document 2 Japanese Unexamined Patent Application, First Publication No. 2009-148683
[Patent Document 3] Japanese Unexamined Patent Application, First Publication No. 2009-235058
[Patent Document 4] Japanese Unexamined Patent Application, First Publication No. 2009-155292

### SUMMARY OF THE INVENTION

[Problems to be Solved by the Invention]

The combined use of hydrogen peroxide and a copper complex having a specific ligand is recognized to demonstrate extremely superior disinfecting effects in an evaluation test of disinfecting strength by a suspension method as is used in the evaluations of disinfecting strength of Patent Documents 1 to 4 (test carried out by dispersing bacteria in an aqueous solution and adding a sample (such as a disinfectant composition) thereto).
However, according to studies conducted by the inventors of the present invention, in the case of evaluating by an evaluation test that conforms more closely to actual use than a suspension method, even if the use of hydrogen peroxide is combined with the use of a copper complex having a specific ligand, disinfecting effects against gram negative bacteria were determined to be inadequate. Namely, in the case gram negative bacteria have become adhered to a textile product such as clothing and hydrogen peroxide is allowed to act on the textile product in the presence of a copper complex having a specific ligand, the disinfecting effects thereof decreased considerably in comparison with the case of evaluating with a suspension method. This problem was particularly remarkable in the case the textile product was a cotton product.
With the foregoing in view, an object of the present invention is to provide a disinfectant composition and disinfecting method capable of effectively eliminating gram negative bacteria adhered to textile products, and particularly cotton

products.

[Means for Solving the Problems]

As a result of conducting extensive studies, the inventors of the present invention found that the aforementioned problems are resolved by combining the components (A) to (D) indicated below, thereby leading to completion of the present invention.
The present invention that resolves the aforementioned problems has the aspects indicated below.

[1] A disinfectant composition containing the following components (A) to (D):

component (A): a zinc compound,
component (B): a chelate compound represented by the following general formula (b1) or (b2),
component (C): hydrogen peroxide or a peroxide that releases hydrogen peroxide in water, and
component (D): an organic peroxy acid precursor that generates an organic peroxy acid by reacting with the component (C) :

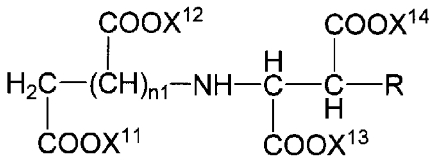

··· (b 1)

(wherein, $X^{11}$ to $X^{14}$ respectively and independently represent a hydrogen atom, alkaline metal, alkaline earth metal or cationic ammonium, R represents a hydrogen atom or hydroxyl group, and n1 represents an integer of 0 or 1);

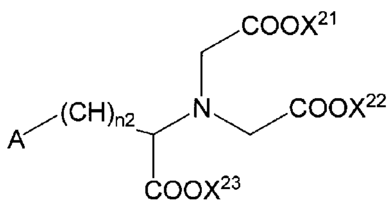

··· (b 2)

(wherein, A represents an alkyl group, carboxyl group, sulfo group, amino group, hydroxyl group or hydrogen atom, $X^{21}$ to $X^{23}$ respectively and independently represent a hydrogen atom, alkaline metal, alkaline earth metal or cationic ammonium, and n2 represents an integer of 0 to 5).

[2] A disinfectant composition containing the following components (A) to (D):

component (A): a zinc compound,
component (B) : at least one type of compound selected from the group consisting of polyethyleneimine, a polymer having a constituent unit represented by the following general formula (I) and a polymer having a constituent unit represented by the following general formula (II),
component (C): hydrogen peroxide or a peroxide that releases hydrogen peroxide in water, and
component (D): an organic peroxy acid precursor that generates an organic peroxy acid by reacting with the component (C) :

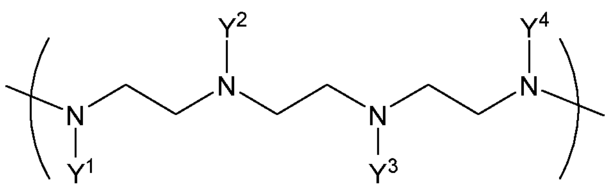

(I)

(wherein, $Y^1$ to $Y^4$ respectively and independently represent a hydrogen atom, alkyl group, a group represented by the general formula - $(CH_2)_m$-$X^1$ (wherein, $X^1$ represents a primary amino group, secondary amino group, tertiary amino group, amido group or hydroxyl group, and the second amino group, the tertiary amino group and the amido group may have as a substituent -$COOX^{11'}$ (wherein, $X^{11'}$ represents a hydrogen atom or salt-forming cation), and m represents 1 or 2) or a group represented by the general formula - $(CH_2)_n$-$COOX^2$ (wherein, $X^2$ represents a hydrogen atom or salt-forming cation, and n represents 1 or 2), and at least one of $Y^1$ to $Y^4$ is a group represented by the general formula - $(CH_2)_m$-$X^1$ and in which $X^1$ in the formula is a secondary amino group, tertiary amino group or amido group having the -$COOX^{11'}$ as a substituent, or a group represented by the general formula -$(CH_2)_n$-$COOX^2$) ;

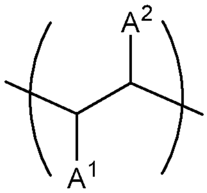

(II)

(wherein, $A^1$ and $A^2$ respectively and independently represent a hydrogen atom, alkyl group, a group represented by the general formula - $(CH2)_p$-$X^3$ (wherein, $X^3$ represents a primary amino group, secondary amino group, tertiary amino group, amido group or hydroxyl group, and the secondary amino group, the tertiary amino group and the amido group may have as a substituent -$COOX^{31}$ (wherein, $X^{31}$ represents a hydrogen atom or salt-forming cation) and p represents an integer of 0 to 2) or a group represented by the general formula - $(CH_2)_q$-$COOX^4$ (wherein, $X^4$ represents a hydrogen atom or a salt-forming cation, and q represents an integer of 0 to 2), and at least one of $A^1$ and $A^2$ is group represented by the general formula - $(CH_2)_p$-$X^3$ in which $X^3$ in the formula is a secondary amino group, tertiary amino group or amido group having as a substituent -$COOX^{31}$, or a group represented by the general formula - $(CH_2)_q$-$COOX^4$).

[3] The disinfectant composition described in [1] further containing the following component (E):

component (E): a copper compound.

[4] The disinfectant composition described in [3], wherein the molar ratio (B)/(A) of the component (B) to the component (A) is within the range of 0.05 to 2.
[5] The disinfectant composition described in [3] or [4], which is used by being contained in water so that the Zn concentration is 0.02 ppm to 1.1 ppm and the Cu concentration is 0.002 ppm to 0.13 ppm.
[6] The disinfectant composition described in [1], wherein the following component (E) is not contained and the molar ratio (B) / (A) of the component (B) to the component (A) is within the range of 0.1 to 2.5:

component (E): a copper compound.

[7] The disinfectant composition described in [6], which is used by being contained in water so that the Zn concentration is 0.1 ppm to 7 ppm.
[8] The disinfectant composition described in [2], wherein the weight ratio of the component (B) to Zn derived from the component (A) is within the range of 0.5 to 12.
[9] The disinfectant composition described in [2] or [8], which is used by being contained in water so that the Zn concentration is 0.1 ppm to 7 ppm.
[10]The disinfectant composition described in [2] or [8] further containing the following component (E):

component (E): a copper compound.

[11]The disinfectant composition described in [10], which is used by being contained in water so that the Zn concentration is 0.02 ppm to 2.5 ppm and the Cu concentration is 0.002 ppm to 0.15 ppm.
[12]The disinfectant composition described in any of [1] to [11], wherein the component (D) is represented by the following general formula (d1):

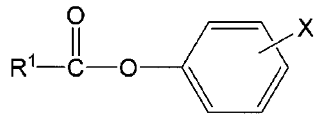

··· (d 1)

(wherein, $R^1$ represents a linear aliphatic hydrocarbon group having 7 to 18 carbon atoms, and X represents a hydrogen atom, -COOM or $-SO_3M$ (wherein, M represents a hydrogen atom or salt-forming cation).

[13]A disinfecting method comprising contacting the disinfectant composition described in any one of [1] to [12] with a textile product in water.

[Effects of the Invention]

According to the aspects of the present invention, a disinfectant composition and disinfecting method can be provided that are capable of effectively eliminating gram negative bacteria adhered to textile products, and particularly cotton products.

EMBODIMENTS OF THE INVENTION

The following provides a detailed explanation of the present invention. The disinfectant composition of a first aspect of the present invention contains the following components (A) to (D) :

component (A): a zinc compound,
component (B): a chelate compound represented by the following general formula (b1) or (b2),
component (C): hydrogen peroxide or a peroxide that releases hydrogen peroxide in water, and
component (D): an organic peroxy acid precursor that generates an organic peroxy acid by reacting with the component (C) :

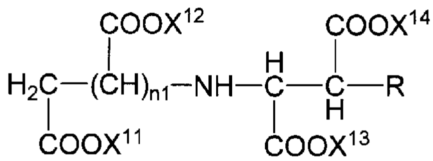

··· (b 1)

(wherein, $X^{11}$ to $X^{14}$ are the same as previously defined, R is the same as previously defined, and n1 is the same as previously defined);

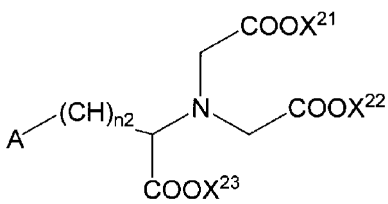

··· (b 2)

(wherein, A is the same as previously defined, $X^{21}$ to $X^{23}$ are the same as previously defined, and n2 is the same as previously defined).

The disinfectant composition of a second aspect of the present invention contains the following components (A) to (D) :

component (A): a zinc compound,
component (B) : at least one type of compound selected from the group consisting of polyethyleneimine, a polymer having a constituent unit represented by the following general formula (I) and a polymer having a constituent unit represented by the following general formula (II),
component (C): hydrogen peroxide or a peroxide that releases hydrogen peroxide in water, and
component (D): an organic peroxy acid precursor that generates an organic peroxy acid by reacting with the component (C) :

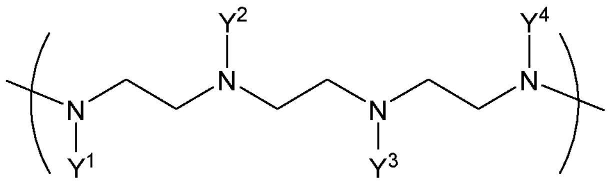

(I)

(wherein, $Y^1$ to $Y^4$ are the same as previously defined);

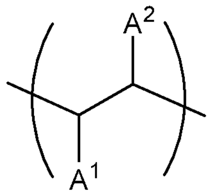

(II)

(wherein, $A^1$ and $A^2$ are the same as previously defined).

Examples of preferable embodiments include that which contains the following component (E) in addition to components (A) to (D) (to also be referred to as the first embodiment), and that which contains the components (A) to (D) but does not contain the following component (E) (to be referred to as the second embodiment).
Here, in the present specification and scope of claims for patent, "disinfection" refers to the action of eliminating bacteria adhered to the surface of a disinfection target (such as a textile product) from that surface.
A "disinfectant composition" refers to a collection of the aforementioned 4 or 5 components that contribute to disinfecting effects.
Although aspects of the present invention are explained in greater detail through preferable examples thereof, the following explanations are common to the first and second aspects of the present invention unless specifically indicated otherwise.

<Component (A) >

Component (A) is a zinc compound.

The disinfectant composition is normally used by introducing into water. Consequently, component (A) is preferably that which generates zinc ions in water.
Examples of zinc compounds that generate zinc ions in water include water-soluble salts of zinc. Examples of water-soluble salts include nitrates, sulfates, chlorides, acetates, perchlorates, cyanides, ammonium chlorides and tartrates, and hydrates thereof can also be used.
Preferable examples of component (A) include zinc nitrate, zinc sulfide, zinc sulfate, zinc chloride, zinc acetate, zinc cyanide, zinc ammonium chloride, zinc tartrate, zinc perchlorate and zinc gluconate, and zinc sulfate, zinc sulfate monohydrate and zinc sulfate heptahydrate are particularly preferable from the viewpoints of handling ease, safety and cost.
One type of component (A) may be used alone or two or more types may be used in combination.
In the disinfectant composition, the content of component (A) is suitably set in consideration of the balance with other components and the method of use. As an example thereof, component (A) is a component that generates zinc ions in water, and the zinc ions form a complex with component (B) to be subsequently described. This complex acts together with components (C) and (D) to demonstrate disinfecting effects. Consequently, in the case of disinfecting by introducing the disinfectant composition into water, the content of component (A) is preferably set so that the Zn concentration in water after introducing into water is within a range that allows the obtaining of adequate disinfecting effects, and so that the amount of the disinfectant composition required for achieving the aforementioned concentration is an amount that is suitable for use. In particular, the component (E) to be subsequently described is a component that generates copper ions in water, the copper ions form a complex with component (B) in the same manner as zinc ions, and this complex acts with components (C) and (D) to be subsequently described to demonstrate disinfecting effects. Consequently, the preferable range of the Zn concentration in water after introducing the disinfectant composition into water is mainly set according to whether or not component (E) has been compounded therein.
In the following explanations, water into which the disinfectant composition has been introduced may also be referred to as treated liquid.

In the first aspect of the present invention, although there are no particular limitations on the Zn concentration in the treated liquid, in the first embodiment that contains component (E), the Zn concentration is preferably 0.02 ppm to 1.1 ppm, more preferably 0.07 ppm to 0.7 ppm, and even more preferably 0.07 ppm to 0.6 ppm, although varying according to the Cu concentration. If the Zn concentration exceeds 1.1 ppm, disinfecting effects may conversely decrease, while if the Zn concentration is less than 0.02 ppm, adequate disinfecting effects may be unable to be obtained.
In the second embodiment that does not contain component (E), the Zn concentration is preferably 0.1 ppm to 7 ppm, more preferably 0.2 ppm to 4.5 ppm and even more preferably 0.45 ppm to 1.1 ppm. If the Zn concentration exceeds 7 ppm, disinfecting effects may conversely decrease, while if the Zn concentration is less than 0.1 ppm, adequate disinfecting effects may be unable to be obtained.

Although there are no particular limitations on the Zn concentration in the treated liquid in the second aspect of the present invention, in the first embodiment that contains component (E), the Zn concentration is preferably 0.2 ppm to 2.5 ppm, more preferably 0.06 ppm to 1.2 ppm and even more preferably 0.1 ppm to 0.7 ppm, although varying according to the Cu concentration. If the Zn concentration exceeds 2.5 ppm, disinfecting effects may conversely decrease, while if the Zn concentration is less than 0.02 ppm, adequate disinfecting effects may be unable to be obtained.
In the second embodiment that does not contain component (E), the Zn concentration is preferably 0.1 ppm to 7 ppm, more preferably 0.2 ppm to 4.5 ppm and even more preferably 0.45 ppm to 1.2 ppm. If the Zn concentration exceeds 7 ppm, disinfecting effects may conversely decrease, while if the Zn concentration is less than 0.1 ppm, adequate disinfecting effects may be unable to be obtained.
Furthermore, in the present specification and scope of claims for patent, concentration (ppm) refers to the weight of the aforementioned components contained in 1000 g of the treated liquid.

<Component (B)>

In the first aspect of the present invention, component (B) is a chelate compound represented by the following general formula (b1) or (b2).
Component (B) forms $-COO^-$ as a result of ionization when dissoled in water. This $-COO^-$ moiety is thought to form a complex with zinc released from component (A) or with copper ions released from component (E).

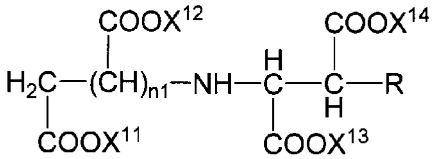

… (b 1)

(In the formula, $X^{11}$ to $X^{14}$ respectively and independently represent a hydrogen atom, alkaline metal, alkaline earth metal or cationic ammonium, R represents a hydrogen atom or hydroxyl group, and n1 represents an integer of 0 or 1.)

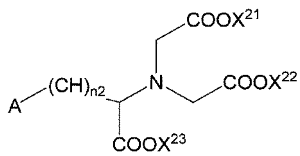

… (b 2)

(In the formula, A represents an alkyl group, carboxyl group, sulfo group, amino group, hydroxyl group or hydrogen atom, $X^{21}$ to $X^{23}$ respectively and independently represent a hydrogen atom, alkaline metal, alkaline earth metal or cationic ammonium, and n2 represents an integer of 0 to 5.)

In formula (b1), examples of alkaline metals represented by $X^{11}$ to $X^{14}$ include sodium and potassium. Examples of alkaline earth metals include calcium and magnesium. Furthermore, in the case at least one of $X^{11}$ to $X^{14}$ is an alkaline earth metal, it is equivalent to 1/2 the number of atoms thereof. For example, in the case $X^{11}$ is calcium, $-COOX^{11}$ becomes "$-COO^-$1/2 (Ca) ".
Examples of cationic ammonium include alkanolamines such as monoethanolamine or diethanolamine. Specific examples include those in which 1 to 3 of the hydrogen atoms of the ammonium are substituted with alkanol groups. The number of carbon atoms of the alkanol groups is preferably 1 to 3.
In particular, $X^{11}$ to $X^{14}$ are preferably alkaline metals.

$X^{11}$ to $X^{14}$ in formula (b1) may each be the same or different.
R may be a hydrogen atom or hydroxyl group.
n1 is preferably 1.

Specific examples of chelate compounds represented by formula (b1) include iminodisuccinic acid, 3-hydroxy-2,2'-iminosuccinic acid and salts thereof. Examples of salts include alkaline metal salts such as sodium salts or potassium salts, and alkanolamine salts such as monoethanolamine salts or diethanolamine salts, and sodium salts or potassium salts are particularly preferable.

Examples of alkaline metals, alkaline earth metals and cationic ammonium in $X^{21}$ to $X^{23}$ in formula (b2) are respectively the same as the alkaline metals, alkaline earth metals and cationic ammonium represented by the aforementioned $X^{11}$ to $X^{14}$.
In particular, $X^{21}$ to $X^{23}$ are preferably alkaline metals.
$X^{21}$ to $X^{23}$ in formula (b2) may each be the same or different.
The alkyl group represented by A may be linear or branched. The number of carbons of the alkyl group is preferably 1 to 30 and more preferably 1 to 18. A portion of the hydrogen atoms of the alkyl group may be replaced by substituents. Examples of substituents include a sulfo group ($-SO_3H$), amino group ($-NH_2$), hydroxyl group and nitro group ($-NO_2$).
A may be any of an alkyl group, carboxyl group, sulfo group, amino group, hydroxyl group or hydrogen atom, and a hydrogen atom is particularly preferable.
n2 is preferably an integer of 0 to 2 and particularly preferably 1.

Specific examples of chelate compounds represented by formula (b2) nitrilotriacetic acid, glutamic acid N,N-diacetic acid, L-aspartic acid N,N-diacetic acid, serine diacetic acid and salts thereof, and methylglycine diacetic acid is particularly preferable. Examples of the salts thereof include alkaline metal salts such as sodium salts or potassium salts and alkanolamine salts such as monoethanolamine salts and diethanolamine salts, and sodium salts or potassium salts are particularly preferable.

In the first aspect of the present invention, one type of component (B) may be used alone or two or more types may be used in combination.
The content of component (B) in the disinfectant composition is set in consideration of the contents of component (A) and component (E). In the first embodiment containing component (E), the content of component (B) is preferably within the range of 0.05 to 2, more preferably 0.08 to 1.3 and even more preferably 0.5 to 0.7 as the molar ratio (B)/(A) of component (B) to component (A). If the molar ratio (B)/(A) is less than 0.05, disinfecting effects may conversely decrease, while if ratio exceeds 2, adequate disinfecting effects may be unable to be obtained.
In the second embodiment that does not contain component (E), the content of component (B) is preferably within the range of 0.1 to 2.5, more preferably 0.15 to 2 and even more preferably 0.5 to 1 as the molar ratio (B)/(A) of component (B) to component (A). If the molar ratio (B)/(A) is less than 0.1, disinfecting effects may conversely decrease, while if ratio exceeds 2.5, adequate disinfecting effects may be unable to be obtained.
In addition, in the first embodiment, the content of component (B) is preferably within the range of 0.048 to 1.9, more preferably 0.078 to 1.2 and even more preferably 0.48 to 0. 68 as the molar ratio (B)/[(A)+(E)] of component (B) to the total of component (A) and component (E).

In the second embodiment of the present invention, component (B) is at least one type of compound selected from the group consisting of polyethyleneimine, a polymer having a specific constituent unit represented by general formula (I) (to be referred to as polymer (B2)) and a polymer having a specific constituent unit represented by general formula (II) (to be referred to as polymer (B3)).
Here, a "constituent unit" indicates a repeating unit that composes a polymer.
Component (B) is a high molecular weight compound that has a plurality of amino groups and/or carboxyl groups that may form a salt in the structure thereof, and as a result of having these groups, forms a complex with zinc ions released from component (A) or copper ions released from component (E) when component (B) is dissolved in water. This is thought to contribute to improvement of disinfecting effects.

Polyethyleneimine is a polymer obtained by polymerizing ethyleneimine, and normally forms a branched and/or mesh structure in which a portion of nitrogen atoms contained in the main chain serve as branching points, and contains primary to tertiary amino groups in the structure thereof.
Polyethyleneimine that has been synthesized in accordance with known methods may be used for the polyethyleneimine, or a commercially available product may be used. Examples of commercially available products include members of the Lupasol series manufactured by BASF GmbH and members of the Epomine series manufactured by Nippon Shokubai Co., Ltd.

The polymer (B2) has a constituent unit represented by the following general formula (I) (to be referred to as constituent unit (I)).

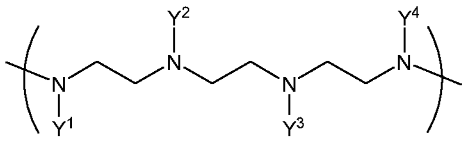

(I)

(In the formula, $Y^1$ to $Y^4$ respectively and independently represent a hydrogen atom, alkyl group, a group represented by the general formula - $(CH_2)_m$-$X^1$ (wherein, $X^1$ represents a primary amino group, secondary amino group, tertiary amino group, amido group or hydroxyl group, and the second amino group, the tertiary amino group and the amido group may have as a substituent -$COOX^{11'}$ (wherein, $X^{11'}$ represents a hydrogen atom or salt-forming cation), and m represents 1 or 2) or a group represented by the general formula-$(CH_2)_n$-$COOX^2$ (wherein, $X^2$ represents a hydrogen atom or salt-forming cation, and n represents 1 or 2), and at least one of $Y^1$ to $Y^4$ is a group represented by the general formula - $(CH_2)_m$-$X^1$ and in which $X^1$ in the formula is a secondary amino group, tertiary amino group or amido group having the -$COOX^{11'}$ as a substituent, or a group represented by the general formula - $(CH_2)_n$-$COOX^2$.)

In formula (I) above, alkyl groups represented by $Y^1$ to $Y^4$ may be linear or branched, and the number of carbon atoms thereof is preferably 1 to 24 and more preferably 1 to 16.

$X^1$ in the formula - $(CH_2)_m$-$X^1$ may be any of a primary amino group (-$NH_2$), secondary amino group, tertiary amino group, amido group or hydroxyl group.

The secondary amino group, tertiary amino group and amido group may also respectively have -$COOX^{11'}$ as a substituent (wherein, $X^{11'}$ represents a hydrogen atom or salt-forming cation). Examples of salt-forming cations represented by $X^{11'}$ include the same examples of salt-forming cations listed in the explanation of $X^2$ to be subsequently described.

The secondary amino group, tertiary amino group and amido group may also have a substituent other than $X^{11'}$. Examples of these other substituents include primary to tertiary amino groups, hydroxyl group and -$SO_3X^{12}$ (wherein, $X^{12}$ represents a hydrogen atom or salt-forming cation). Examples of substituents in the form of secondary and tertiary amino groups include the same secondary and tertiary amino groups represented by $Y^1$ to $Y^4$. Examples of salt-forming cations represented by $X^{12}$ include the same examples of salt-forming cations listed in the explanation of $X^2$ to be subsequently described.

X1 preferably represents a primary to tertiary amino group or amido group, more preferably a primary to tertiary amino group, and even more preferably a secondary to tertiary amino group.

A specific example of a secondary amino group is -$NHR^{11}$ (wherein, $R^{11}$ represents an optionally substituted monovalent hydrocarbon group or alkoxy group).

A specific example of a tertiary amino group is -$NHR^{12}R^{13}$ (wherein $R^{12}$ and $R^{13}$ respectively and independently represent an optically substituted monovalent hydrocarbon group or alkoxy group).

Examples of monovalent hydrocarbon groups represented by $R^{11}$ and $R^{13}$ include an alkyl group and alkenyl group, and an alkyl group is preferable. The alkyl group may be linear or branched, and the number of carbon atoms thereof is preferably 1 to 24 and more preferably 1 to 16.

The alkoxy group represented by $R^{11}$ to $R^{13}$ may be linear or branched, and the number of carbon atoms thereof is preferably 1 to 24 and more preferably 1 to 16.

The monovalent hydrocarbon group and the alkoxy group may each have a substituent. Examples of substituents include the aforementioned -$COOX^{11'}$, primary to tertiary amino groups, a hydroxyl group and -$SO_3X^5$.

Specific examples of amido groups include -CO-$NH_2$, -CO-$NHR^{11}$, -CO-$NR^{12}R^{13}$ and groups in which all or a portion of the hydrogen atoms of the primary amino group and secondary amino group are replaced by an acyl group. $R^{11}$ to $R^{13}$ in these amido groups are the same as previously defined. An example of an acyl group is -C(=O)-$R^{14}$ (wherein, $R^{14}$ represents an optionally substituted monovalent hydrocarbon group). Examples of $R^{14}$ are the same as those of $R^{11}$ to $R^{13}$.

The m in the formula -$(CH_2)_m$-$X^1$ is 1 or 2 and preferably 2.

Specific examples of groups represented by the formula - $(CH_2)_m$-$X^1$ include - $(CH_2)_2NH_2$, $(CH_2)_2NH$ $(CH_2)_2NH_2$, -$(CH_2)_2$ $[(CH_2)_2NH_2]_2$, - $(CH_2)_2OH$, - $(CH_2)_2CONH_2$ and - $(CH_2)_2N$ $[CH_2COONa]_2$.

Examples of salt-forming cations represented by $X^2$ in formula - $(CH_2)_n$-$COOX^2$ include alkaline metals, alkaline earth metals and cationic ammonium.

Examples of alkaline metals are the same as those listed as examples of $X^{11}$ to $X^{14}$ in formula (b1).

Examples of alkaline earth metals are the same as those listed as examples of $X^{11}$ to $X^{14}$ in formula (b1). Furthermore, in the case $X^2$ is an alkaline earth metal, it is equivalent to 1/2 the number of atoms thereof. For example, in the case $X^2$ is calcium, _$COOX^2$ becomes "-COO-1/2(Ca)".

Examples of cationic ammonium are the same as those listed as examples of $X^{11}$ to $X^{14}$ in formula (b1). The number of carbon atoms of the alkanol groups is preferably 1 to 3.

$X^2$ is preferably a hydrogen atom, alkaline metal, alkaline earth metal or cationic ammonium, and is more preferably a hydrogen atom or alkaline metal.

In formula-$(CH_2)_n$-$COOX^2$, n is 1 or 2.

In formula (I), at least one of $Y^1$ to $Y^4$ is a group represented by the formula $-(CH_2)_m-X^1$ and in which $X^1$ in the formula is a secondary amino group, tertiary amino group or amido group having the $-COOX^{11'}$ as a substituent, or a group represented by the general formula - $(CH_2)_n-COOX^2$ (these are to be collectively referred to as carboxyl group-containing groups). As a result, superior disinfecting effects are obtained.
Examples of secondary amino groups, tertiary amino groups and amido groups having $-COOX^{11'}$ as a substituent include monovalent hydrocarbon groups or alkoxy groups in which $R^{11}$ in the aforementioned $-NHR^{11}$ or $-CO-NHR^{11}$ has $-COOX^{11'}$, and monovalent hydrocarbon groups or alkoxy groups in which one or both of $R^{12}$ and $R^{13}$ in the aforementioned $-NR^{12}R^{13}$ or $-NR^{12}R^{13}$ has $-COOX^{11'}$.$-(CH_2)_kCOOX^{11'}$ is preferable for the monovalent hydrocarbon group having $-COOX^{11'}$. In this formula, k represents 1 or 2.
One to four of $Y^1$ to $Y^4$ is preferably a carboxyl group-containing group, and more preferably 3 to 4 are carboxyl group-containing groups.

The constituent unit (I) possessed by the polymer (B2) may be one type or two or more types.
In addition, the polymer (B2) may be composed only of the constituent unit (I), or may be composed of the constituent unit (I) and constituent units other than constituent unit (I). However, in consideration of the effects of the present invention and the ability to form a complex with component (A) and component (E), the ratio of constituent unit (I) in polymer (B2) is preferably 40 mol% or more and more preferably 80 mol% or more based on the total of all constituent units that compose the polymer (B2). There are no particular limitations on the upper limit of the aforementioned ratio, and may be 100 mol%.
Examples of constituent units other than the constituent unit (I) that may be possessed by the polymer (B2) include constituent units in which $Y^1$ to $Y^4$ in general formula (I) respectively and independently represent a hydrogen atom, alkyl group or group represented by the general formula - $(CH_2)_m-X^1$ and in which $X^1$ in the formula is a group that does not contain $-COOX^{11'}$ (secondary amino group, tertiary amino group or amido group not having $-COOX^{11'}$ as a substituent, primary amino group or hydroxyl group).

Specific examples of the polymer (B2) include polymers in which - $(CH_2)_n-COOX^2$ and/or - $(CH_2)_m-N(CH_2)_kCOO^{11'})_2$ is introduced as a substituent into a nitrogen atom that composes the main chain of polyethyleneimine (to be referred to as aminopolycarboxylic acid-based polymers). In the formulas, n, $X^2$, m, k and $X^{11'}$ are the same as previously defined.
A polymer that has been synthesized in accordance with a known method may be used for the polymer (B2) or a commercially available product may be used. An example of a commercially available product of the aforementioned aminopolycarboxylic acid-based polymer is Trilon B manufactured by BASF Corp.

The polymer (B3) has a constituent unit represented by the following general formula (II) (to be referred to as constituent unit (II)):

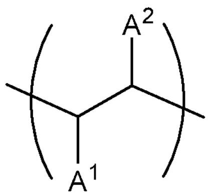

(II)

(wherein, $A^1$ and $A^2$ respectively and independently represent a hydrogen atom, alkyl group, a group represented by the general formula - $(CH_2)_p-X^3$ (wherein, $X^3$ represents a primary amino group, secondary amino group, tertiary amino group, amido group or hydroxyl group, and the secondary amino group, the tertiary amino group and the amido group may have as a substituent $-COOX^{31}$ (wherein, $X^{31}$ represents a hydrogen atom or salt-forming cation) and p represents an integer of 0 to 2) or a group represented by the general formula - $(CH_2)_q-COOX^4$(wherein, $X^4$ represents a hydrogen atom or a salt-forming cation, and q represents an integer of 0 to 2), and at least one of $A^1$ and $A^2$ is group represented by the general formula - $(CH_2)_p-X^3$ in which $X^3$ in the formula is a secondary amino group, tertiary amino group or amido group having as a substituent $-COOX^{31}$ or a group represented by the general formula$-(CH_2)_q-COOX^4$).

In formula (II), alkyl groups represented by $A^1$ and $A^2$ may be linear or branched, and the number of carbon atoms thereof is preferably 1 to 24 and more preferably 1 to 16.
$X^3$ in the formula - $(CH_2)_p-X^3$ may be any of a primary amino group, secondary amino group, tertiary amino group, amido group or hydroxyl group.
The secondary amino group, tertiary amino group and amido group may each have as a substituent $-COOX^{31}$ (wherein, $X^{31}$ represents a hydrogen atom or salt-forming cation). Examples of $X^{31}$ are the same as those listed as examples of $X^{11'}$. The secondary amino group, tertiary amino group and amido group may each also have a substituent other than $-COOX^{31}$. Examples of other substituents include primary to tertiary amino groups, hydroxyl groups and $-SO_3X^{32}$ (wherein, $X^{32}$ represents a hydrogen atom or salt-forming cation). Examples of secondary and tertiary amino groups present as

substituents are the same as those listed as examples of secondary and tertiary amino groups in the aforementioned $Y^1$ to $Y^4$. Examples of $X^{32}$ are the same as those listed as examples of $X^{12}$ in the aforementioned $-SO_3X^{12}$.
Preferable examples of $X^3$ include primary to tertiary amino groups and amido groups, and primary to tertiary amino groups are more preferable. Specific examples thereof are the same as those listed as examples in the explanation of $X^1$.
In - $(CH_2)_p$-$X^3$,p is an integer of 0 to 2 and preferably 1 or 2.
Preferable specific examples of - $(CH_2)_p$-$X^3$ include $-NH_2$ and $-NH(CH_3)_2$.
Examples of salt-forming cations represented by $X^4$ in $-(CH_2)_q-COOX^4$ include are the same as those listed as examples of salt-forming cations represented by $X^2$ in $-(CH_2)_n-COOX^2$ described in the explanation of $Y^1$ to $Y^4$ in formula (I).
In - $(CH_2)_q$-$COOX^4$, q is an integer of 0 to 2 and is preferably 0 or 1, and particularly preferably 0.

In formula (II), at least one of $A^1$ and $A^2$ is a group represented by the aforementioned formula - $(CH_2)_p$-$X^3$ m and in which $X^3$ in the formula is a group represented by a secondary amino group, tertiary amino group or amide group having $-COOX^{31}$ as a substituent thereof, or a group represented by the aforementioned general formula $-(CH_2)_q-COOX^4$. As a result, superior disinfecting effects are obtained.
Examples of secondary amino groups, tertiary amino groups and amido groups having $-COOX^{31}$ as a substituent thereof include groups in which $R^{11}$ in the aforementioned $-NHR^{11}$ or $-CO-NHR^{11}$ is a monovalent hydrocarbon group or alkoxy group having $-COOX^{11'}$ and groups in which one or both of $R^{12}$ and $R^{13}$ in the aforementioned $-NR^{12}R^{13}$ or $-NR^{12}R^{13}$ is a monovalent hydrocarbon group or alkoxy group having $-COOX^{11'}$.

The constituent unit (II) possessed by the polymer (B3) may be one type or two or more types.
In addition, the polymer (B3) may be composed only of the constituent unit (II), or may be composed of the constituent unit (II) and constituent units other than constituent unit (II). However, in consideration of the effects of the present invention and the ability to form a complex with component (A) or component (E), the ratio of constituent unit (II) in polymer (B3) is preferably 40 mol% or more and more preferably 80 mol% or more based on the total of all constituent units that compose the polymer (B3). There are no particular limitations on the upper limit of the aforementioned ratio, and may be 100 mol%.
Examples of constituent units other than the constituent unit (II) that may be possessed by the polymer (B3) include constituent units in which $A^1$ and $A^2$ in general formula (II) respectively and independently represent a hydrogen atom, alkyl group or group represented by the general formula - $(CH_2)_p$-$X^3$ and in which $X^3$ in the formula is a group that does not contain $-COOX^{31}$ (secondary amino group, tertiary amino group or amido group not having $-COOX^{31}$ as a substituent, primary amino group or hydroxyl group).

Specific examples of the polymer (B3) include polyacrylic acid, polymethacrylic acid, polymaleic acid, polyhydroxyacrylic acid, polyfumaric acid, acrylic acid/maleic acid copolymer and acrylic acid/acrylamide copolymer. Among these, acrylic acid/maleic acid copolymer is preferable from the viewpoints of the ability to form a complex with component (A) or component (E), ease of production and cost.
A polymer that has been synthesized in accordance with a known method may be used for the polymer (B3) or a commercially available product may be used. Examples of commercially available products of acrylic acid/maleic acid copolymers include Sokalan CP5 and Sokalan CP7 manufactured by BASF Corp., and members of the Aqualic TL Series manufactured by Nippon Shokubai Co., Ltd.

In the second aspect of the present invention, polyethyleneimine, aminopolycarboxylic acid-based copolymers and acrylic acid/maleic acid copolymer are preferable, polyethyleneimine or aminopolycarboxylic acid-based copolymers are more preferable, and polyethyleneimine is particularly preferable for component (B).

In the second aspect of the present invention, the molecular weight of component (B) as the weight average molecular weight thereof is preferably within the range of 2, 000 to 200, 000, more preferably within the range of 5,000 to 100,000, and even more preferably within the range of 10, 000 to 50, 000. If the weight average molecular weight is less than 2,000, there is the risk of being unable to adequately obtain the effects of the present invention. This is thought to be due to accelerated decomposition of hydrogen peroxide (derived from component (C)) in water. On the other hand, if the weight average molecular weight exceeds 200,000, handling becomes difficult accompanying the increase in viscosity.
The weight average molecular weight of component (B) is determined by gel permeation chromatography (GPC) using pullulan having a known molecular weight as a standard.

In the second aspect of the present invention, one type or two or more types of component (B) may be contained in the disinfectant composition.
The content of component (B) in the disinfectant composition is set in consideration of the content of component (A). The content of component (B) is preferably such that the weight ratio of component (B) to Zn derived from component (A) (to be described as "B/A(Zn)") is within the range of 0.5 to 12. The ratio B/A(Zn) is more preferably 0.8 to 7 and even more preferably 1.5 to 5.5. If the ratio B/A(Zn) is less than 0.5 or greater than 12, there is the risk of being unable to adequately obtain the effects of combining component (A) and component (B).

<Component (C)>

Component (C) is hydrogen peroxide or peroxide that releases hydrogen peroxide in water.
Specific examples of component (C) include sodium percarbonate, sodium perborate monohydrate and sodium perborate tetrahydrate. Among these, sodium percarbonate is preferable from the viewpoints of solubility during use and stability during storage.
A peroxide is used for component (C) in the case the disinfectant composition is a solid (such as in the form of a powder, granules, tablets, briquettes, sheets or bars). At this time, the peroxide may be incorporated in the disinfectant composition directly, or may be incorporated in the form of coated particles (such as coated sodium percarbonate particles) obtained by forming a coating on the peroxide particles for the purpose of improving storage stability and the like.
Either hydrogen peroxide or a peroxide may be used for component (C) in the case the disinfectant composition is a liquid.
Known coated particles can be used for the coated particles. For example, particles coated with silicic acid and/or silicate and boric acid and/or borate, or particles coated with a combination of a surfactant such as LAS and an inorganic compound, are preferable as coated sodium percarbonate particles. Specific examples thereof include particles coated by spraying with a silicic acid and/or alkaline metal silicate aqueous solution and a boric acid and/or alkaline metal borate aqueous solution as described in Japanese Patent Publication No. 2918991, particles coated with an aromatic hydrocarbon sulfonate and/or alkaline silicate, carbonate, bicarbonate and sulfate having a mean particle diameter of 10 μm to 500 μm as described in Japanese Patent Publication No. 2871298, and particles coated with a water-insoluble organic compound such as paraffin or wax. In order to make these particles non-hazardous, the particles may be used in the form of a blended powder with various inorganic substances such as sodium carbonate or sodium bicarbonate.
Moreover, in the case the disinfectant composition is a composition having a high moisture content due to the incorporation of a surfactant and the like, particles coated with a coated peroxide obtained by coating sodium percarbonate with silicic acid and sodium borate, an aromatic hydrocarbon sulfonate and alkaline silicate, carbonate, bicarbonate or persulfate are used more preferably.

[Measurement method of mean particle diameter]

Furthermore, in the case the disinfectant composition is a solid, the moisture content in the disinfectant composition is preferably 2% by weight or less in consideration of the stability of component (C).
Examples of coated sodium percarbonate include those produced according to methods described in Japanese Unexamined Patent Application, First Publication No. S59-196399 and U.S. Patent No. 4526698 (in both of which sodium percarbonate is coated with borate), as well as Japanese Unexamined Patent Application, First Publication No. H4-31498, Japanese Unexamined Patent Application, First Publication No. H6-40709, Japanese Unexamined Patent Application, First Publication No. H7-118003 and Japanese Patent Publication No. 2871298.
In the case of incorporating component (C) in the disinfectant composition in the form of particles (peroxide particles or coated particles), the mean particle diameter of the particles is preferably 200 μm to 1,000 μm and more preferably 500 μm to 1,000 μm. In addition, particles having a particle diameter of less than 125 μm and particles having a particle diameter in excess of 1,400 μm preferably account for 10% by weight or less of component (C) in order to improve solubility and stability.
In the present specification, the term "mean particle diameter" refers to the value determined by the measurement method described below.
First, a sizing procedure is carried out on the measurement target (sample) using a receptacle and nine levels of sieves having mesh sizes of 1,680 μm, 1,410 μm, 1,190 μm, 1,000 μm, 710 μm, 500 μm, 350 μm, 250 μm and 149 μm. This sizing procedure is carried out by first stacking the nine sieves on the receptacle so that mesh size gradually increases moving towards the top, followed by placing the sample in the sieve having a mesh size of 1, 680 μm located on top using 100 g of sample each time. Next, a cover is placed over the top sieve, the receptacle and sieves are attached to a Ro-Tap Sieve Shaker (Iida Seisakusho Japan Corp., tapping rate: 156 times/min, rolling rate: 290 times/min) and after shaking for 10 minutes, sample remaining in each of the sieves and the receptacle is recovered for each mesh size followed by measurement of sample weight.
The weight frequency between the receptacle and each of the sieves is integrated, the mesh size of the first sieve for which the integrated weight frequency is 50% or more is designated as a μm, the mesh size of the sieve that is one level larger than a μm is designated as b μm, the integrated value of weight frequency from the receptacle to the sieve designated as aμm is designated as c% and the weight frequency of the sieve located above the sieve designated as aμm is designated as d%, after which the mean particle diameter (50% by weight) is determined from the following equation (1).
[0055]

$$\text{Mean particle diameter (50\% by weight particle diameter)} = 10^{[50-\{c-d/(\log b - \log a) \times \log\}]/\{d/(\log b - \log a)\}} \quad (1)$$

One type of component (C) may be used alone or two or more types may be used in combination.
The content of component (C) in the disinfectant composition is suitably set in consideration of the balance with other components and the method of use. As an example thereof, in the case of carrying out disinfection by adding the disinfectant composition to a treated liquid, the content of component (C) is preferably set so that the concentration of component (C) in the treated liquid is within a preferable range and so that the amount of the disinfectant composition required for achieving the aforementioned concentration is an amount that is suitable for use.
Although there are no particular limitations thereon, the concentration of component (C) in the treated liquid is preferably 1. 6 ppm to 1, 300 ppm, more preferably 1.6 to 650 ppm and even more preferably 3.2 to 50 ppm as the concentration of hydrogen peroxide. Disinfecting effects may not increase or may conversely decrease if the concentration of component (C) exceeds 1,300 ppm, while adequate disinfecting effects may not be obtained if the concentration is less than 1.6 ppm. The concentration as hydrogen peroxide refers to the concentration of hydrogen peroxide in the case component (C) is hydrogen peroxide, or is the concentration of hydrogen peroxide able to be generated from the peroxide in the case component (C) is a peroxide.

<Component (D)>

Component (D) is an organic peroxy acid precursor that generates an organic peroxy acid by reacting with the component (C). Component (D) normally reacts with component (C) in water or a treated liquid.
A bleach activator conventionally incorporated in hydrogen peroxide-based bleach compositions and the like can be used for component (D). Specific examples thereof include sodium octanoyloxybenzenesulfonate, sodium nonanoyloxybenzenesulfonate, sodium decanoyloxybenzenesulfonate, sodium undecanoyloxybenzenesulfonate, sodium dodecanoyloxybenzenesulfoante, octanoyloxybenzoic acid, nonanoyloxybenzoic acid, decanoyloxybenzoic acid, undecanoyloxybenzoic acid, dodecanoyloxybenzoic acid, octanoyloxybenzene, nonanoyloxybenzene, decanoyloxybenzene, undecanoyloxybenzene, dodecanoyloxybenzene, tetraacetyl ethylenediamine, pentaacetyl glucose, triacetine, diacetine, monoacetine, terephthalic acid monocholine ester and terephthalic acid dicholine ester.
In particular, a compound represented by the following general formula (d1) is preferable for component (D):

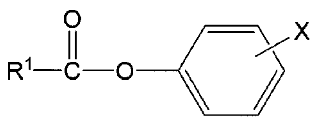

··· (d1)

(wherein, $R^1$ represents a linear aliphatic hydrocarbon group having 7 to 18 carbon atoms, and X represents a hydrogen atom, -COOM or $-SO_3M$ (wherein, M represents a hydrogen atom or salt-forming cation).
In formula (d1), the aliphatic hydrocarbon group represented by $R^1$ may be a saturated aliphatic hydrocarbon group (alkyl group) or an aliphatic hydrocarbon group having an unsaturated bond. The number of carbons of the aliphatic hydrocarbon group is preferably 8 to 11 from the viewpoint of superior disinfecting effects.
Examples of salt-forming cations represented by -COOM or $-SO_3M$ include alkaline metals, alkaline earth metals and cationic ammonium listed as examples in the explanation of $X^{11}$ to $X^{14}$ in the aforementioned formula (b1).
M is preferably a hydrogen atom, alkaline metal, alkaline earth metal or cationic ammonium, and is preferably a hydrogen atom or alkaline metal.
In formula (d1), there are no particular limitations on the bonding site of X in the benzene ring. The para position (position 4) of the bonding site of $R^1C(=O)O-$ is preferable from the viewpoints of production yield and organic peroxy acid formation efficiency.
Specific examples of compounds represented by formula (d1) include decanoyloxybenzoic acid, sodium dodecanoyloxybenzenesulfonate and sodium nonanoyloxybenzenesulfonate, and decanoyloxybenzoic acid and sodium dodecanoyloxybenzenesulfonate are preferable from the viewpoint of the effect on color fading of clothing. In particular, 4-decanoyloxybenzoic acid and sodium 4-dodecanoyloxybenzenesulfonate are preferable.
From the viewpoint of stability during storage, component (D) is preferably incorporated as a granulated substance or molded article, and is more preferably incorporated as a granulated substance.
The content of component (D) in a granulated substance or molded article is preferably 30% by weight to 95% by weight

and more preferably 50% by weight to 90% by weight. If the content of component (D) is less than 30% by weight or in excess of 95% by weight, it may be difficult to adequately obtain the effect of granulation.

Component (D) is preferably formed into a granulated substance or molded product using a binder compound. A known binder compound can be used for the binder compound. Preferable examples of binder compounds include polyethylene glycol, saturated fatty acids having 12 to 20 carbon atoms, and polyacrylic acid having a weight average molecular weight of 1,000 to 1,000,000 and salts thereof.

Polyethylene glycol having an average molecular weight of 500 to 25,000 is preferable for the polyethylene glycol. The average molecular weight thereof is more preferably 1,000 to 20,000, even more preferably 2,600 to 9,300 and particularly preferably 7,300 to 9,300.

The saturated fatty acid having 12 to 20 carbon atoms is preferably a saturated fatty acid having 14 to 20 carbon atoms and more preferably a saturated fatty acid having 14 to 18 carbon atoms.

Furthermore, in the present specification, the average molecular weight of polyethylene glycol indicates the average molecular weight described in the Japanese Standards of Cosmetic Ingredients (Supplement II). The weight average molecular weight of polyacrylic acid and salts thereof is a value obtained by measuring by gel permeation chromatography using polyethylene glycol for the standard.

In the granulated substance or molded article, the content of the binder compound is preferably 0.5% by weight to 30% by weight, more preferably 1% by weight to 20% by weight, and even more preferably 5% by weight to 20% by weight.

A surfactant may be further incorporated in the granulated substance or molded article in order to improve the solubility of the granulated substance or molded article in a treated liquid.

A known surfactant can be used for the surfactant. Preferable examples of surfactants include polyoxyalkylene alkyl ether, olefin sulfonate, alkylbenzene sulfonate, alkyl sulfate ester, polyoxyethylene alkyl ether sulfate ester and mixtures of two or more types thereof.

The polyoxyalkylene alkyl ether is preferably that in which the number of carbon atoms of the alkyl group is 10 to 15, and that to which ethylene oxide (EO) and/or propylene oxide (PO) has been added as alkylene oxide is particularly preferable. The average number of moles of alkylene oxide added in the polyoxyalkylene alkyl ether is preferably a total of 4 to 30 and more preferably a total of 5 to 15 in the case of either EO, PO or a mixture of EO and PO. In addition, the molar ratio of EO/PO is preferably 5/0 to 1/5 and more preferably 5/0 to 1/2.

The olefin sulfonate is preferably a sodium salt or potassium salt of $\alpha$-olefin sulfonic acid in which the number of carbon atoms of the alkyl group is 14 to 18.

The alkylbenzene sulfonate is preferably a sodium salt or potassium salt of a linear alkylbenzene sulfonic acid in which the number of carbon atoms of the alkyl group is 10 to 14.

The alkyl sulfate ester is preferably an alkyl sulfate ester in which the number of carbon atoms of the alkyl group is 10 to 18, more preferably an alkaline metal salt such as a sodium salt, and even more preferably sodium lauryl sulfate or sodium myristyl sulfate.

The polyoxyethylene alkyl ether sulfate ester is preferably a polyoxyethylene alkyl ether sulfate ester having an alkyl group having 10 to 18 carbon atoms, and more preferably a sodium salt. The average degree of polymerization of the oxyethylene group in the polyoxyethylene alkyl ether sulfate ester (to be abbreviated as POE) is preferably 1 to 10 and more preferably 1 to 5. The polyoxyethylene alkyl ether sulfate ester is particularly preferably sodium lauryl polyoxyethylene ether sulfate (POE = 2 to 5) or sodium myristyl polyoxyethylene ether sulfate (POE = 2 to 5).

The content of surfactant in the granulated substance or molded article is preferably 0% by weight to 50% by weight, more preferably 3% by weight to 40% by weight, and even more preferably 5% by weight to 30% by weight.

A film-forming polymer or zeolite may be further incorporated in the granulated substance or molded article. In the case the disinfectant composition contains an alkaline component and water, although there is the risk of the effect of component (D) being impaired due to the occurrence of hydrolysis thereof due to the presence of these substances during storage, the incorporation of a film-forming polymer or zeolite makes it possible to inhibit the occurrence of this decomposition.

The granulated substance or molded article can be produced by a known granulation or molding method.

During granulation or molding, melting the binder compound in advance and then adding to component (D) (along with a surfactant and the like as necessary) is preferable since more preferable results are obtained, such as maintaining the strength of the granulated substance or molded article and improving ease of production, storage stability and the like. At this time, the temperature at which the binder compound is melted is preferably 40°C to 100°C, more preferably 50°C to 100°C and even more preferably 50°C to 90°C.

A granulated substance or molded product is obtained by stirring and mixing these components until they are homogeneous followed by granulation or molding.

An example of a preferable granulation method in the case of a granulated substance is extrusion granulation. In this case, the mean particle diameter of the granulated substance is preferably 500 $\mu$m to 5,000 $\mu$m and more preferably 500 $\mu$m to 3,000 $\mu$m.

In addition, a method consisting of molding into the form of tablets with a briquetting machine is a preferable example

of a molding method in the case of a molded article.

One type of component (D) may be used alone or two or more types may be used in combination.

The content of component (D) in the disinfectant composition is suitably set in consideration of the balance with other components and the method of use. As an example thereof, in the case of carrying out disinfection by adding the disinfectant composition to a treated liquid, the content of component (D) is preferably set so that the concentration of component (D) in the treated liquid is within a preferable range and so that the amount of the disinfectant composition required for achieving the aforementioned concentration is an amount that is suitable for use.

Although there are no particular limitations thereon, the concentration of component (D) in the treated liquid is preferably 1.5 ppm to 75 ppm, more preferably 1.5 to 45 ppm and even more preferably 1.5 to 30 ppm. In addition to disinfecting effects not increasing or conversely decreasing if the concentration of component (D) exceeds 75 ppm, textile products such as clothing may also be damaged, while adequate disinfecting effects may not be obtained if the concentration is less than 1.5 ppm.

<Component (E)>

Component (E) is a copper compound.

As was previously described, since the disinfectant composition is normally used by placing in water, component (E) is preferably that which generates copper ions in water.

Examples of copper compounds that generate copper ions in water include water-soluble salts of copper. Examples of water-soluble salts include nitrates, sulfates, chlorides, acetates, perchlorates, cyanides, ammonium chlorides and tartrates, and hydrates thereof can also be used.

Preferable examples of component (E) include copper nitrate, copper sulfide, copper sulfate, copper chloride, copper acetate, copper cyanide, copper ammonium chloride, copper tartrate, copper perchlorate and copper gluconate, and copper sulfate pentahydrate is particularly preferable from the viewpoints of handling ease, safety and cost.

One type of component (E) may be used alone or two or more types may be used in combination.

In the disinfectant composition, the content of component (E) is suitably set in consideration of the balance with other components and the method of use. As an example thereof, component (E) is a component that generates copper ions in water as previously described, the copper ions form a complex with component (B) in the same manner as zinc ions derived from component (A), and this complex acts together with components (C) and (D) to demonstrate disinfecting effects. Consequently, in the case of disinfecting by introducing the disinfectant composition into water, the content of component (E) is preferably set so that the Cu concentration in the treated liquid following introduction of the disinfectant composition is within a preferable range and so that the amount of the disinfectant composition required for achieving the aforementioned concentration is an amount that is suitable for use.

In the first aspect of the present invention, although there are no particular limitations thereon, the concentration of Cu in the treated liquid is preferably 0.002 ppm to 0.13 ppm, more preferably 0.003 ppm to 0.07 ppm, and even more preferably 0.01 ppm to 0.07 ppm.

If the Cu concentration exceeds 0.13 ppm, disinfecting effects may conversely decrease, while if the Cu concentration is less than 0.002 ppm, adequate disinfecting effects may be unable to be obtained.

In addition, although there are no particular limitations thereon, the total concentration of Zn and Cu in the treated liquid is preferably 0.022 ppm to 1.23 ppm, more preferably 0.073 ppm to 0.77 ppm and even more preferably 0.08 ppm to 0.67 ppm.

In the second aspect of the present invention, although there are no particular limitations thereon, the Cu concentration in the treated liquid is preferably 0.002 ppm to 0.15 ppm, more preferably 0.003 ppm to 0.07 ppm and even more preferably 0.01 ppm to 0.07 ppm, although varying according to the Zn concentration. If the Cu concentration exceeds 0. 15 ppm, disinfecting effects may conversely decrease, while if the Cu concentration is less than 0.002 ppm, adequate disinfecting effects may be unable to be obtained.

In addition, although there are no particular limitations thereon, the total concentration of Zn and Cu in the treated liquid is preferably 0.022 ppm to 2.65 ppm, more preferably 0.063 ppm to 1.27 ppm and even more preferably 0.11 ppm to 0.77 ppm.

Components (A) and (E) are each components that generate metal ions (zinc ions or copper ions) in water as was previously described, and each metal ion is able to form a complex with component (B). These complexes are thought to act together with components (C) and (D) to demonstrate disinfecting effects.

In the disinfectant composition of the present invention, components (A) and (E) may each be incorporated after forming a complex with component (B) (after the zinc or copper contained in each component forms a complex with component (B)) or may be incorporated without forming a complex.

Complex formation may be carried for only one of component (A) or component (E), or may be carried out for both components.

Complex formation of component (E) can be carried out according to a method described in, for example, Japanese Unexamined Patent Application, First Publication No. 2009-148682 or Japanese Unexamined Patent Application, First Publication No. 2009-155292. Complex formation of component (A) can be carried out according to the same method as that of complex formation of component (E) with the exception of using component (A) instead of component (E).
In the case of considering appearance and production ease of the disinfectant composition, component (A) and component (E) are preferably incorporated in the disinfectant composition separately without forming a complex.

The form of the disinfectant composition of the present invention may be a solid such as a powder, granules, tablets, briquettes, sheets or bars, or a liquid. The form of the disinfectant composition is preferably a solid and more preferably a powder.
There are no particular limitations on the preparation method of the disinfectant composition of the present invention, and can be prepared by, for example, suitably forming a complex with a portion of the aforementioned components as necessary as previously described, or can be prepared in accordance with ordinary methods for each form with the exception of granulation or molding.

The disinfectant composition of the present invention is preferably used in combination with a cleaning agent composition.
In this case, the disinfectant composition of the present invention may be used as a disinfectant separate from the cleaning agent composition, or may be used by incorporating in the cleaning agent composition as a portion of the constituents of the cleaning agent composition.
There are no particular limitations on the composition of the cleaning agent composition, and conventional known components can be suitably used in combination as components incorporated in the cleaning agent composition. Examples of these components include components (I) to (XI) indicated below.

[Component (I): Surfactant]

Examples of surfactants include anionic surfactants, nonionic surfactants, cationic surfactants and amphoteric surfactants, and one type of these may be used alone or two or more types may be suitably used in combination.

There are no particular limitations on the anionic surfactant provided it is that which is conventionally used in detergent, and various types of anionic surfactants can be used.
Examples of anionic surfactants include those listed below:

(1) linear or branched alkylbenzene sulfonates (LAS or ABS) having an alkyl group having 8 to 18 carbon atoms;
(2) alkane sulfonates having 10 to 20 carbon atoms;
(3) α-olefin sulfonates (AOS) having 10 to 20 carbon atoms;
(4) alkyl sulfates or alkenyl sulfates (AS) having 10 to 20 carbon atoms;
(5) alkyl (or alkenyl) ether sulfates (AES) having a linear or branched alkyl (or alkenyl) group having 10 to 20 carbon atoms obtained by adding an average of 0.5 moles to 10 moles of any alkylene oxide having 2 to 4 carbon atoms or ethylene oxide and propylene oxide (in which the molar ratio of EO/PO is 0.1/9.9 to 9.9/0.1);
(6) alkyl (or alkenyl) phenyl ether sulfates having a linear or branched alkyl (or alkenyl) group having 10 to 20 carbon atoms obtained by adding an average of 3 to 30 moles of any alkylene oxide having 2 to 4 carbon atoms or ethylene oxide and propylene oxide (in which the molar ratio of EO/PO is 0.1/9.9 to 9.9/0.1) ;
(7) alkyl (or alkenyl) ether carboxylates having a linear or branched alkyl (or alkenyl) group having 10 to 20 carbon atoms obtained by adding an average of 0.5 moles to 10 moles of any alkylene oxide having 2 to 4 carbon atoms or ethylene oxide and propylene oxide (in which the molar ratio of EO/PO is 0.1/9.9 to 9.9/0.1);
(8) alkyl polyvalent alcohol ether sulfates in the manner of alkyl glyceryl ether sulfonates having 8 to 20 carbon atoms;
(9) saturated or unsaturated α-sulfofatty acid salts having 8 to 20 carbon atoms or methyl, ethyl or propyl esters thereof, of which an α-sulfofatty acid salt or methyl ester thereof (α-SF or MES) is preferable;
(10) long chain monoalkyl, dialkyl or sesquialkyl phosphates;
(11) polyoxyethylene monoalkyl, dialkyl or sesquialkyl phosphates; and,
(12) higher fatty acid salts (soaps) having 10 to 20 carbon atoms.

These anionic surfactants can be used as salts of alkaline metals such as sodium or potassium, as amine salts or as ammonium salts and the like. In addition, any two or more types of these anionic surfactants may be mixed as used as a mixture.

Preferable examples of anionic surfactants include alkaline metal salts (such as sodium salts or potassium salts) of linear alkylbenzene sulfonates (LAS), alkaline metal salts (such as sodium salts or potassium salts) of AOS, MES, AS or AES, and alkaline metal salts (such as sodium salts or potassium salts) of higher fatty acids, and preferably include MES having a carbon chain length of 14 to 18 carbon atoms in particular.

There are no particular limitations on the nonionic surfactant provided it is conventionally used in detergent,

and various types of nonionic surfactants can be used.
Examples of nonionic surfactants include those listed below:

(1) polyoxyalkylene alkyl (or alkenyl) esters obtained by adding 3 moles to 30 moles, preferably 4 moles to 20 moles and even more preferably 5 moles to 17 moles of an alkylene oxide having 2 to 4 carbon atoms to an aliphatic alcohol having 10 to 18 carbon atoms and preferably 12 to 14 carbon atoms, of which polyoxyethylene alkyl (or alkenyl) ether and polyoxyethylene polyoxypropylene alkyl (or alkenyl) ether are preferable, and wherein, examples of the aliphatic alcohol used include primary alcohols and secondary alcohols in which the alkyl group thereof may also be branched, and the aliphatic alcohol is preferably a primary alcohol;
(2) polyoxyethylene alkyl (or alkenyl) phenyl ethers;
(3) fatty acid alkyl ester alkoxylates obtained by adding an alkylene oxide between the ester bonds of a long chain fatty acid alkyl ester;
(4) polyoxyethylene sorbitan fatty acid esters;
(5) polyoxyethylene sorbitol fatty acid esters;
(6) polyoxyethylene fatty acid esters;
(7) polyoxyethylene hydrogenated castor oil;
(8) glycerin fatty acid esters;
(9) fatty acid alkanolamides;
(10) polyoxyethylene alkylamines;
(11) alkyl glycosides; and
(12) alkylamine oxides.

Examples of the fatty acid ester alkoxylates of (3) above include those represented by the following general formula (31).

$$R^9CO\ (OA)_nOR^{10} \qquad (31)$$

In the above formula (31), $R^9CO$ represents a fatty acid residue having 6 to 22 carbon atoms and preferably 8 to 18 carbon atoms.
OA represents an alkylene oxide adduct having 2 to 4 carbon atoms and preferably 2 to 3 carbon atoms, and is preferably ethylene oxide or propylene oxide.
n represents the average number of alkylene oxide added, and is typically 3 to 30 and preferably 5 to 20.
$R^{10}$ represents an optionally substituted alkyl group having 1 to 3 carbon atoms.
Among the aforementioned nonionic surfactants, polyoxyethylene alkyl (or alkenyl) ethers, polyoxyethylene polyoxypropylene alkyl (or alkenyl) ethers, fatty acid methyl ester ethoxylates obtained by adding ethylene oxide to a fatty acid methyl ester and fatty acid methyl ester ethoxypropoxylates obtained by adding ethylene oxide and propylene oxide to a fatty acid methyl ester, each having a melting point of 40°C or lower and an HLB value of 9 to 16, are used preferably.
Furthermore, the HLB value of nonionic surfactants used in the present invention refers to the value determined according to the method of Griffin (see Yoshida, Shindoh, Yamanaka, eds., "New Surfactant Handbook", Kogaku Tosho Publishing Co., Ltd., 1991, p.234).
In addition, melting point as used in the present invention refers to the value measured according to the congealing point determination method described in JIS K8001 entitled "General Rules for Test Methods of Reagents".
One type of any of these nonionic surfactants may be used alone or two or more types may be suitably used in combination.
There are no particular limitations on the cationic surfactant provided it is conventionally used in detergent, and various types of nonionic surfactants can be used.
Examples of nonionic surfactants include those listed below:

(1) di-long chain alkyl di-short chain alkyl quaternary ammonium salts;
(2) mono-long chain alkyl tri-short chain alkyl quaternary ammonium salts; and
(3) tri-long chain alkyl mono-short chain alkyl quaternary ammonium salts.

"Long chain alkyl" in (1) to (3) above refers to alkyl groups having 12 to 26 carbon atoms. The number of carbon atoms of these alkyl groups is preferably 14 to 18.
"Short chain alkyl" refers to optionally substituted alkyl groups having 1 to 4 carbon atoms. The number of carbon atoms of these alkyl groups is preferably 1 or 2. Examples of substituents that may be possessed by the alkyl groups include phenyl groups, benzyl groups, hydroxyl groups, hydroxyalkyl groups and polyoxyalkylene groups. The number of carbon atoms of hydroxyalkyl groups is preferably 2 to 4 and more preferably 2 or 3. The number of carbon atoms of the alkylene

group in polyoxyalkylene groups is preferably 2 to 4 and more preferably 2 or 3.

There are no particular limitations on the amphoteric surfactant provided it is conventionally used in detergent, and various types of amphoteric surfactants can be used.

Furthermore, the present invention is not limited to the aforementioned surfactants, but rather other known surfactants can also be suitably used, and one type thereof may be used alone or two or more types may be suitably used in combination.

Component (I) is preferably incorporated in the cleaning agent composition as surfactant-containing particles. Preferable examples of surfactant-containing particles include surfactant-containing particles having an anionic surfactant as the primary surfactant thereof, and surfactant-containing particles having a nonionic surfactant as the primary surfactant thereof. One type of these surfactant-containing particles may be used alone or two or more types may be used in combination.

[Surfactant-Containing Particles having Anionic Surfactant as Primary Surfactant]

Surfactant-containing particles having an anionic surfactant as the primary surfactant thereof (to be referred to as anionic surfactant-containing particles) refer to particles having an anionic surfactant as an essential component thereof, and in which the content of the anionic surfactant is the highest among all surfactants incorporated in the anionic surfactant-containing particles.

There are no particular limitations on the anionic surfactant incorporated in the anionic surfactant-containing particles, and each of the various types of anionic surfactants previously described can be used. One type or two or more types of anionic surfactants may be incorporated in the anionic surfactant-containing particles.

Although there are restrictions on the contents thereof, surfactants other than anionic surfactants (such as nonionic surfactants, cationic surfactants or amphoteric surfactants) can also be incorporated in the anionic surfactant-containing particles.

The content of all surfactants present in the anionic surfactant-containing particles can be determined in consideration of the desired cleaning performance of the cleaning agent composition, and for example, is preferably 10% by weight to 90% by weight, more preferably 15% by weight to 70% by weight and even more preferably 15% by weight to 50% by weight. Adequate cleaning effects can be demonstrated if the content is within the range of 10% by weight to 90% by weight.

In addition, the weight ratio of anionic surfactant to other surfactants in the anionic surfactant-containing particles is preferably 100/0 to 50/50, more preferably 100/0 to 55/45 and even more preferably 95/5 to 70/30.

The anionic surfactant-containing particles may also contain a component other than a surfactant.

Examples of other components that may be contained in the anionic surfactant-containing particles include components (II) to (XI) to be subsequently described. Among these, inorganic or organic detergent builders are preferable, and inorganic builders are particularly preferable.

The inorganic builder is preferably a potassium salt such as potassium carbonate or potassium sulfate or an alkaline metal chloride such as potassium chloride or sodium chloride since these also have the effect of improving solubility. In particular, alkaline metal salts such as potassium carbonate, potassium chloride or sodium chloride are preferable from the viewpoint of the balance between solubility improving effects and cost.

In the case of incorporating potassium carbonate, the content thereof in the anionic surfactant-containing particles is preferably 1% by weight to 15% by weight, more preferably 2% by weight to 12% by weight and even more preferably 3% by weight to 10% by weight from the viewpoint of solubility improving effects.

In the case of incorporating an alkaline metal chloride, the content thereof in the anionic surfactant-containing particles is preferably 1% by weight to 10% by weight, more preferably 2% by weight to 8% by weight, and even more preferably 3% by weight to 7% by weight from the viewpoint of solubility improving effects.

Although there are no particular limitations on the physical properties of the anionic surfactant-containing particles, normally the bulk density thereof, for example, is preferably 0.3 g/mL or more, more preferably 0.5 g/mL to 1.2 g/mL and even more preferably 0.6 g/mL to 1.1 g/mL.

Bulk density is the value measured in accordance with JIS K3362 (to apply similarly hereinafter).

In addition, the mean particle diameter (50% by weight) is preferably 200 μm to 1,500 μm and more preferably 300 μm to 1, 000 μm. If the mean particle diameter (50% by weight) is less than 200 μm, dust may be generated easily, while if the mean particle diameter (50% by weight) exceeds 1, 500 μm, solubility may be inadequate.

Moreover, the fluidity of the anionic surfactant-containing particles in terms of the angle of repose is preferably 60° or less and particularly preferably 50° or less. If the angle of repose exceeds 60°, handling ease of the particles may become poor.

Furthermore, the angle of repose can be determined by measuring the angle formed between the slip plane formed when particles filled into a container flow out and the horizontal plane according to a method for measuring angle of repose using the so-called discharge method (to apply similarly hereinafter).

Surfactant-containing particles having an anionic surfactant as the primary surfactant thereof can be obtained by a known method, and for example, can be obtained by the following method (1) or (2).

Method (1): Granulation of neutral salt type anionic surfactant.
Method (2) : Dry neutralization of acid precursor of anionic surfactant followed by granulation.

Examples of the granulation method used in (1) above include the following methods (1-1) to (1-5):

(1-1) extrusion granulation method consisting of kneading and mixing a raw material powder of detergent components and a binder compound (surfactant, water or liquid polymer component and the like) followed by extrusion and granulation;
(1-2) kneading/crushing granulation method consisting of kneading and mixing followed by crushing of the resulting solid detergent and granulation;
(1-3) agitation granulation method consisting of adding a binder compound to a raw material powder, agitating with an impeller and granulating;
(1-4) rolling granulation method consisting of granulating by rotating a raw material powder while spraying a binder compound thereon; and,
(1-5) fluid bed granulation method consisting of granulating by fluidizing a raw material powder while spraying a liquid binder thereon.

In method (2), an acid precursor of an anionic surfactant and an alkaline inorganic powder are granulated by neutralizing while contacting and mixing. More specifically, a granulation method similar to the granulation method exemplified in method (1) can be used for the granulation method at this time.
Any acid precursor can be preferably used for the acid precursor of the anionic surfactant provided it is an acid precursor of the previously described anionic surfactants.
In addition, there are no particular limitations on the alkaline inorganic powder used as a neutralizing agent, and examples include an alkaline metal carbonate, alkaline metal silicate and alkaline metal phosphate.
Examples of alkaline metal carbonates include sodium carbonate, potassium carbonate, sodium bicarbonate, potassium bicarbonate and sodium potassium carbonate. Examples of alkaline metal silicates include sodium silicate and layered sodium silicate. Examples of alkaline metal phosphates include sodium tripolyphosphate and sodium pyrophosphate.
Among these, alkaline metal carbonates are preferable, and sodium carbonate, potassium carbonate and sodium potassium carbonate are particularly preferable.

One type or two or more types thereof can be used.

Anionic surfactant-containing particles granulated according to the aforementioned methods can also be used in products consisting only of anionic surfactant-containing particles of a desired particle size by sizing as necessary.

[Surfactant-Containing Particles having Nonionic Surfactant as Primary Surfactant]

Surfactant-containing particles having a nonionic surfactant as the primary surfactant thereof (to be referred to as nonionic surfactant-containing particles) refer to particles having a nonionic surfactant as an essential component thereof, and in which the content of the nonionic surfactant is the highest among all surfactants incorporated in the nonionic surfactant-containing particles.
There are no particular limitations on the nonionic surfactant incorporated in the nonionic surfactant-containing particles, and each of the various types of nonionic surfactants previously described can be used. One type or two or more types of nonionic surfactants may be incorporated in the nonionic surfactant-containing particles.
Although there are restrictions on the contents thereof, surfactants other than nonionic surfactants (such as anionic surfactants, cationic surfactants or amphoteric surfactants) can also be incorporated in the nonionic surfactant-containing particles.
The content of all surfactants present in the nonionic surfactant-containing particles can be determined in consideration of the desired cleaning performance of the cleaning agent composition, and for example, is preferably 5% by weight to 85% by weight and more preferably 10% by weight to 60% by weight. Adequate cleaning effects can be demonstrated if the content is within the range of 5% by weight to 85% by weight.
In addition, the weight ratio of nonionic surfactant to other surfactants in the nonionic surfactant-containing particles is preferably 100/0 to 50/50, more preferably 100/0 to 60/40 and even more preferably 95/5 to 70/30.
The anionic surfactant-containing particles may also contain a component other than a surfactant. There are no particular limitations on the other components, and components listed as examples of components other than surfactants in the explanation of the aforementioned anionic surfactant-containing particles can be suitably incorporated as other components.
Among these, preferable examples of components incorporated in the nonionic surfactant-containing particles include inorganic or organic detergent builders. Detergent builders able to be incorporated in the anionic surfactant-containing particles as detergent builders can be used in the same manner. This applies similarly to preferable examples of detergent builders and the content of detergent builders.

In addition, an oil absorbent carrier for supporting the nonionic surfactant is preferably incorporated in the nonionic surfactant-containing particles.
An oil absorbent carrier in which the amount of oil absorption as determined by the test method of JIS K5101 is preferably 80 mL/100 g or more and more preferably 150 mL/100 g to 600 mL/100 g is preferably used for the oil absorbent carrier. Examples of such oil absorbent carriers include the components described in Japanese Unexamined Patent Application, First Publication No. H5-125400 and Japanese Unexamined Patent Application, First Publication No. H5-209200. One type of these oil absorbent carriers can be used or two or more types can suitably be used in combination.
The oil absorbent carrier is preferably contained in the nonionic surfactant-containing particles at 0.1% by weight to 25% by weight, more preferably at 0.5% by weight to 20% by weight and even more preferably at 1% by weight to 15% by weight.

In addition, a clay mineral and the like is preferably incorporated in the nonionic surfactant-containing particles as a granulating assistant.
A clay mineral belonging in particular to the smectite group in which the crystal structure thereof adopts a dioctahedral tri-layer structure or a trioctahedral tri-layer structure is preferable for the clay mineral. The amount of oil absorption of clay minerals able to be used as detergent components is preferably less than 80 mL/100 g and more preferably 30 mL/100 g to 70 mL/100 g, and the bulk density is preferably 0.1 g/mL or more and more preferably 0.2 g/mL to 1.5 g/mL. A specific example of this type of clay mineral is the component described in Japanese Unexamined Patent Application, First Publication No. H9-87691.
The clay mineral is preferably contained in the nonionic surfactant-containing particles at 0.1% by weight to 30% by weight, more preferably at 0.5% by weight to 20% by weight and even more preferably at 1% by weight to 10% by weight.

Although there are no particular limitations on the physical properties of the nonionic surfactant-containing particles, normally the bulk density, for example, is preferably 0.3 g/mL or more, more preferably 0.5 g/mL to 1.2 g/mL and even more preferably 0.6 g/mL to 1.1 g/mL.
In addition, the mean particle diameter is preferably 200 μm to 1, 500 μm and more preferably 300 μm to 1, 000 μm. If the mean particle diameter is less than 200 μm, dust may be generated easily, while if the mean particle diameter exceeds 1,500 μm, solubility may be inadequate.
Moreover, the fluidity of the nonionic surfactant-containing particles in terms of the angle of repose is preferably 60° or less and particularly preferably 50° or less. If the angle of repose exceeds 60°, handling ease of the particles may become poor.

Nonionic surfactant-containing particles can be obtained by a granulation method similar to that used for anionic surfactant-containing particles.
The resulting nonionic surfactant-containing particles can also be used in products consisting only of nonionic surfactant-containing particles of a desired particle size by sizing as necessary.

One type of component (I) may be used alone or two or more types may be used in combination.
The content of component (I) in the cleaning agent composition can be determined in consideration of the application of the cleaning agent composition and the like.

[Component (II): Detergent Builder]

Detergent builders are broadly classified into inorganic builders and organic builders.
Examples of inorganic builders include alkaline metal carbonates such as sodium carbonate, potassium carbonate, sodium bicarbonate or sodium sesquicarbonate, alkaline metal sulfites such as sodium sulfite or potassium sulfite, crystalline alkaline metal silicates such as crystalline layered sodium silicate (such as the commercially available product [Na-SKS-6] ($\delta$-$Na_2O$. $2SiO_2$) manufactured by Clariant Japan K.K.), amorphous alkaline metal silicates, sulfates such as sodium sulfate or potassium sulfate, alkaline metal chlorides such as sodium chloride or potassium chloride, crystalline aluminosilicates and amorphous aluminosilicates. Among these, sodium carbonate, potassium carbonate, sodium silicate and aluminosilicates are preferable.
Crystalline aluminosilicates or amorphous aluminosilicates can be used for the aluminosilicate. Crystalline aluminosilicates are preferable from the viewpoint of cation exchange ability.
Zeolite can be preferably incorporated as a crystalline aluminosilicate, and any of type A, type X, type Y or type P zeolite can be used for the zeolite.
The mean primary particle diameter of the crystalline aluminosilicate is preferably 0.1 μm to 10 μm.

In the case of incorporating an inorganic builder into the disinfectant composition in a cleaning agent composition,

the content of the inorganic builder in the cleaning agent composition is suitably determined corresponding to the type of inorganic builder used. For example, in the case of incorporating a crystalline aluminosilicate for the inorganic builder, the content thereof is preferably 0.5% by weight to 40% by weight, more preferably 1% by weight to 25% by weight, even more preferably 3% by weight to 20% by weight and particularly preferably 5% by weight to 15% by weight based on the total solid fraction of the cleaning agent composition from the viewpoint of powder physical properties such as cleaning strength and fluidity.

Examples of organic builders of the present invention include oxidative products of polysaccharides such as starch, cellulose, amylose or pectin, and polysaccharide derivatives such as carboxymethyl cellulose.
In the first aspect of the present invention, examples of organic builders that can be used, in addition to those previously described, include polyacrylates, polyacrylic acid, acrylic acid-allyl alcohol copolymers, acrylic acid-maleic acid copolymers and hydroxyacrylic acid polymers.
Among these organic builders, polyacrylates and acrylic acid-maleic acid polymers are preferable, while salts of acrylic acid-maleic acid polymers and polyacrylates having a molecular weight of 1,000 to 80,000 are particularly preferable.
In the present invention, the content of the organic builder is preferably 0.5% by weight to 20% by weight, more preferably 1% by weight to 10% by weight and even more preferably 2% by weight to 5% by weight based on the total solid fraction of the cleaning agent composition.

One type of component (II) can be used alone or two or more types can be suitably used in combination. Since the purpose is to improve cleaning strength and soil dispersibility in a washing liquid, in the second aspect of the present invention, an organic builder and an inorganic builder such as zeolite are preferably used in combination. In addition, in the first aspect of the present invention, an organic builder such as a polyacrylate or acrylic acid-maleic acid copolymer salt and an inorganic builder such as zeolite are preferably used in combination.
The content of component (II) is preferably 10% by weight to 80% by weight and more preferably 20% by weight to 75% by weight based on the total solid fraction of the cleaning agent composition in order to impart adequate cleaning performance.

[Component (III): Fragrance]

There are no particular limitations on the fragrance, and for example, a fragrance component or fragrance composition described in Japanese Patent Application, First Publication No. 2002-146399 or Japanese Patent Application, First Publication No. 2003-89800 can be used.
Furthermore, a fragrance composition refers to a mixture composed of a fragrance component, solvent, fragrance stabilizer and the like.
In the case of incorporating the fragrance composition in the disinfectant composition, the content thereof is preferably 0.001% by weight to 20% by weight and more preferably 0.01% by weight to 10% by weight based on the total solid fraction of the cleaning agent composition.
One type of component (III) can be used alone or two or more types can be suitably used in combination.

[Component (IV): Coloring Matter]

Various types of coloring matter can be incorporated to improve the appearance of the composition.
Any dye or pigment can be used for the coloring matter. Apigment is preferable from the viewpoint of storage stability, and a compound having oxidation resistance such as an oxide is particularly preferable. Examples of such compounds include titanium oxide, iron oxide, cobalt phthalocyanine, ultramarine, Prussian blue, cyanine blue and cyanine green.
One type of component (IV) can be used alone or two or more types can be suitably used in combination.

[Component (V): Fluorescent Whitening Agent]

Examples of fluorescent whitening agents include 4,4'-bis-(2-sulfostyryl)-biphenyl salts, 4,4'-bis-(4-chloro-3-sulfostyryl)-biphenyl salts, 2-(styrylphenyl)naphthothiazole derivatives, 4,4'-bis(triazol-2-yl)stilbene derivatives and bis-(triazinylaminostilbene)disulfonic acid derivatives.
Examples of commercially available fluorescent whitening agents include Whitex SA and Whitex SKC (trade names, Sumitomo Chemical Co., Ltd.), Tinopal AMS-GX, Tinopal DBS-X and Tinopal CBS-X (trade names, Ciba Specialty Chemicals Inc.), and Lemonite CBUS-3B (trade name, Khyati Chemicals Pvt. Ltd.). Among these, Tinopal CBS-X and Tinopal AMS-GX are preferable.
One type of component (V) can be used alone or two or more types can be suitably used in combination.
The content of component (V) is preferably 0.001% by weight to 1% by weight based on the total solid fraction of the cleaning agent composition.

[Component (VI): Enzyme]

When classified according to enzyme reactivity, examples of enzymes (enzymes inherently demonstrating enzymatic action in the cleaning process) include hydrolases, oxide reductases, lyases, transferases and isomerases, and any of these can be applied.
Particularly preferable examples include proteases, esterases, lipases, nucleases, cellulases, amylases and pectinases.
Specific examples of proteases include pepsin, trypsin, chymotrypsin, collagenase, gelatinase, elastase, subtilisin, BPN, papain, bromelain, carboxypeptidase A and B, aminopeptidase and aspergillopeptidase A and B, while examples of commercially available products include Savinase, Alcalase, Everlase and Kannase (Novozymes A/S), API21 (Showa Denko K.K.), Maxacal and Maxapem (Genencor Inc.), and protease K-14 or K-16 described in Japanese Unexamined Patent Application, First Publication No. H5-25492.
Specific examples of esterases include gastric lipase, pancreatic lipase, plant lipases, phospholipases, cholinesterases and phosphatases.
Specific examples of lipases include commercially available lipases such as Lipolase or Lipex (trade names, Novozymes A/S) and Liposam (Showa Denko K.K.).
Specific examples of cellulases include the commercially available product Celluzyme (trade name, Novozymes A/S) and the cellulase described in claim 4 of Japanese Unexamined Patent Application, First Publication No. S63-264699.
Specific examples of amylases include the commercially available products of Stainzyme, Termamyl and Duramyl (trade names, Novozymes A/S).
Furthermore, enzymes are preferably used by dry blending separately granulated stable particles thereof into a detergent base (particles).
One type of component (VI) can be used alone or two or more types can be suitably used in combination.
The content of component (VI) is preferably 0.3% by weight to 2% by weight based on the total solid fraction of the cleaning agent composition.

[Component (VII): Enzyme Stabilizer]

Examples of substances that can be incorporated as enzyme stabilizers include calcium salts, magnesium salts, polyols, formic acid and boron compounds. Among these, sodium tetraborate and calcium chloride are more preferable.
One type of component (VII) can be used alone or two more types can be suitably used in combination.
The content of component (VII) is preferably 0.05% by weight to 2% by weight based on the total solid fraction of the cleaning agent composition.

[Component (VIII): Other Polymers]

Polyethylene glycol, polyvinyl alcohol or cellulose derivatives such as carboxymethyl cellulose, each having an average molecular weight of 200 to 200, 000, can be incorporated as binders or powder physical property agents in the case of increasing density in order to impart resoling preventive effects to hydrophobic fine particles. In the first aspect of the present invention, polymers of acrylic acid and/or maleic acid having a weight average molecular weight of 1,000 to 100,000 can be used in addition to those described above.
In addition, copolymers or terpolymers or terephthalic acid and ethylene glycol and/or propylene glycol units can be incorporated as soil releasing agents.
In addition, polyvinylpyrrolidone and the like can be incorporated in order to impart color staining preventive effects.
Among the above, polyethylene glycol having an average molecular weight of 1,500 to 7,000 is preferable.
One type of component (VIII) can be used alone or two or more types can be suitably used in combination.
The content of component (VIII) is preferably 0.05% by weight to 5% by weight based on the total solid fraction of the cleaning agent composition.

[Component (IX): Caking Preventive Agent]

Examples of caking preventive agents include para-toluene sulfonate, xylene sulfonate, acetates, succinates, talc, finely powdered silica, clay and magnesium oxide.
One type of component (IX) can be used alone or two or more types can be suitably used in combination.

[Component (X): Antifoaming Agent]

Examples of foaming agents include conventionally known antifoaming agents such as silicone-based or silica-based antifoaming agents.
The foaming agent may also be a granulated antifoaming agent produced using the method described in the lower left column on page 4 of Japanese Unexamined Patent Application, First Publication No. H3-186307. More specifically, 20 g of silicone manufactured by Dow Corning Corp. (compound type, PS Antifoam) are first added as an antifoaming component to 100 g of maltodextrin manufactured by Nippon Starch Chemical Co., Ltd. (enzyme-modified dextrin) followed by mixing to obtain a homogeneous mixture. Next, after mixing 25% by weight of polyethylene glycol (PEG-6000, melting point: 58°C) and 25% by weight of neutral anhydrous sodium sulfate with 50% by weight of the resulting homogeneous mixture at 70°C to 80°C, the resulting mixture was granulated with an extrusion granulator manufactured by Fuji Paudal Co., Ltd. (Model EXKS-1) to obtain a granulated substance.
One type of component (X) can be used alone or two or more types can be suitably used in combination.

[Component (XI): Reducing Agent]

Examples of reducing agents include sodium sulfite and potassium sulfite.
Moreover, components typically incorporated in laundry detergents, bleaches and the like other than those described above can be incorporated as necessary within a range that does not impair the effects of the present invention. The cleaning agent composition can be prepared according to a known method.
The disinfectant composition of the present invention has high disinfecting strength as a result of containing components (A) to (D), and is able to effectively eliminate gram negative bacteria adhered to textile products such as clothing (and particularly cotton products) that was extremely difficult in the prior art. The disinfectant composition of the present invention has high disinfecting strength not only against gram negative bacteria but also against gram positive bacteria.
On the other hand, in the case any of components (A) to (D) is lacking, adequate disinfecting strength is unable to be obtained.
For example, in the case component (B) of the components (A) to (D) is not contained, the disinfecting strength of the disinfectant composition is equal to or lower than that in the case of containing only components (C) and (D) (and not containing components (A) and (B)) . The reason for this is that overall disinfecting effects are thought to diminish as a result of zinc ions formed from component (A) decomposing the hydrogen peroxide of component (C) and the peroxy acid formed from component (D). Similarly with respect to component (E), overall disinfecting effects are thought to diminish as a result of copper ions formed from component (E) decomposing the hydrogen peroxide of component (C) and the organic peroxy acid formed from component (D). On the other hand, as a result of zinc ions and copper ions forming a complex with component (B) in the present invention, favorable disinfecting effects are presumed to be demonstrated while inhibiting decomposition of hydrogen peroxide and the like.
In addition, in the first embodiment of the present invention, disinfecting effects are thought to be synergistically enhanced as a result of component (A) and component (E) each demonstrating disinfecting action on gram negative bacteria by different mechanisms of action. These mechanisms of action are presumed to consist of component (E) and component (C) acting on the cell walls of gram negative bacteria, and component (A) entering the cells of gram negative bacteria and inhibiting enzymes possessed by gram negative bacteria.
Thus, the disinfectant composition of the present invention is preferable for disinfecting textile products and particularly cotton products. Examples of textile products include textile products typically targeted for cleaning by laundering (washed articles), specific examples of which include clothing, dish towels, sheets and curtains.
However, the present invention is not limited thereto, but rather can also be applied to the disinfection of hard surfaces such as those of dishware, porcelain, glass, plastic and dentures.
An example of a method for disinfecting textile products that uses the disinfectant composition of the present invention consists of contacting a textile product with the disinfectant composition in water.
Cotton products are particularly preferable for the textile products since the disinfectant composition of the present invention is highly effective for use with cotton products.
The disinfectant composition is preferably contacted with textile products under alkaline conditions of pH 10 or higher. If the pH is lower than 10, there is the risk of being unable to obtain adequate disinfecting effects. The pH here refers to the pH at 25°C.
Although there are no particular limitations on the method used to contact the disinfectant composition with textile products, examples of preferable methods include introducing the disinfectant composition into water when washing the textile products in a washing machine, and allowing the textile products to soak in water containing the disinfectant composition.
The amount of the disinfectant composition used at this time is suitably adjusted so that the Zn concentration, concentration of component (C) (as hydrogen peroxide), concentration of component (D) and Cu concentration in the water are each within the ranges listed as examples of preferable concentrations in treated water in the explanation of each component. In addition, in the first aspect of the present invention, the ratios of (B)/(A) and (B)/[(A)+(E) ] at this time are

preferably within the preferable ranges listed in the explanation of component (B) in the first aspect of the present invention as previously described.
In addition, in the second aspect of the present invention, the ratio of B/A(Zn) is preferably within the preferable range listed in the explanation of component (B) in the second aspect of the present invention as previously described.

[Examples]

The following provides a more detailed explanation of the present invention by indicating examples thereof. However, the present invention is not limited thereto.
In each of the following examples, raw materials used in the cleaning agent composition and disinfectant composition are indicated below.

(Raw Materials Used in Cleaning Agent Composition)

* MES: Sodium salt of a fatty acid methyl ester sulfonate in which the ratio (weight ratio) of C16 to C18 fatty acids is 80/20 (Lion Corp., AI = 70% and remainder consists of unreacted fatty acid methyl ester, sodium sulfate, methyl sulfate, hydrogen peroxide and water).
* LAS-K: Linear alkylbenzene (10 to 14 carbon atoms) sulfonate (Lipon LH-200 manufactured by Lion Corp. (LAS-H purity: 96%) neutralized with 48% aqueous potassium hydroxide solution during preparation of surfactant composition). The incorporated amounts shown in Table 1 are indicated as the weight percentages (wt%) as LAS-K based on purity.
* LAS-Na: Linear alkylbenzene (10 to 14 carbon atoms) sulfonate (Lipon LH-200 manufactured by Lion Corp. (LAS-H purity: 96%) neutralized with 48% aqueous sodium hydroxide solution during preparation of surfactant composition). The incorporated amounts shown in Table 1 are indicated as the weight percentages (wt%) as LAS-Na based on purity.
* Soap: Fatty acid sodium salt having 12 to 18 carbon atoms (Lion Corp., purity: 67%, titer: 40°C to 45°C, fatty acid composition: C12: 11.7%, C14: 0.4%, C16: 29.2%, C18F0 (stearic acid): 0.7%, C18F1 (oleic acid) : 56.80, C18F2 (linoleic acid) : 1.2%, molecular weight: 289).
* Nonionic surfactant: Leox CC-150-90 (Lion Chemical Corp., ethylene oxide adduct containing an average of 15 moles of ethylene oxide of an alcohol having an alkyl group having 12 to 14 carbon atoms).
* Type A zeolite: Type A zeolite (Mizusawa Industrial Chemicals Ltd.)
* Potassium carbonate: Potassium carbonate (Asahi Glass Co., Ltd.)
* Anhydrous sodium sulfate: Neutral anhydrous sodium sulfate (Shikoku Chemicals Corp.).
* Enzyme: Mixture of Everlase 8T (Novozymes A/S), Lipex 50T (Novozymes A/S), Termamyl 60T (Novozymes A/S and Celluzyme 0.7T (Novozymes A/S) at a ratio (weight ratio) of 5/2/1/2.
* CMC: Sodium carboxymethyl cellulose (Daicel Corp., CMC Daicel 1170).
* Sodium carbonate: Sodium bicarbonate (Asahi Glass Co., Ltd., soda ash).

(Raw Materials Used in Disinfectant Composition)

[Component (A)]

* $ZnSO_4 \cdot 7H_2O$: Zinc sulfate (II) heptahydrate (Kanto Chemical Co., Inc.)
* $ZnSO_4 \cdot 1H_2O$: Zinc sulfate (II) monohydrate (Shinyo Co., Ltd.)
* $ZnCl_2$: Zinc (II) chloride (Kanto Chemical Co., Inc.)
* $Zn(NO_3)_2 \cdot 7H_2O$: Zinc (II) nitrate heptahydrate (Kanto Chemical Co., Inc.)

[Component (B)]

* MGDA: Trisodium methylglycine diacetate (BASF GmbH, trade name: Trilon M Powder)
* IDS: Tetrasodium 2,2'-iminodisuccinate (Lanxess Corp.)
* HIDS: Tetrasodium 3-hydroxy-2,2'-iminodisuccinate

(Nippon Shokubai Co., Ltd.)

* NTA: Trisodium nitrilotriacetate (BASF GmbH)
* GLDA: Tetrasodium glutamate-N,N-diacetate (Akzo Nobel Inc.)
* ASDA: Tetrasodium L-aspartate-N,N-diacetate (Nagase Chemtex Corp.)
* EDTA (comparative product) : Tetrasodium ethylenediamine tetraacetate (Kanto Chemical Co., Inc.)
* Polymer 1: Polyethyleneimine (BASF GmbH, trade name: Lupasol HF, weight average molecular weight: approx. 25,000)
* Polymer 2: Aminopolycarboxylic acid-based polymer in which $Y^1$ to $Y^3$ in general formula (I) represent $-CH_2-COONa$ and $Y^4$ represents $-(CH_2)_2N(CH_2COONa)_2$ (BASF GmbH, trade name: Trilon P, weight average molecular weight: approx. 50,000)
* Polymer 3: Copolymer of acrylic acid and maleic acid represented by general formula (II) (Nippon Shokubai Co., Ltd., trade name: Aqualic TL-400 (40% product), weight average molecular weight: approx. 50,000)

The weight average molecular weights of polymers 1 to 3 were each determined by gel permeation chromatography (GPC) using pullulan of a known molecular weight (Showa Denko K.K., Shodex Standard P-82) as a standard.

[Component (C)]

* Sodium percarbonate: Zhejiang Jinke Chemicals Co., Ltd., trade name: SPCC, effective oxygen content: 13.8%, mean particle diameter: 870 μm)

[Component (D)]

* OBS12: Sodium 4-dodecanoyloxybenzenesulfonate (synthesized product)
* OBC10: 4-decanoyloxybenzoic acid (Mitsui Chemicals Inc.)
* TAED: Tetraacetyl ethylenediamine (Clariant Japan K.K., trade name: Peractive AN)

[Component (E)]

* $CuSO_4 \cdot 5H_2O$: Copper (II) sulfate pentahydrate (Kanto Chemical Co., Inc.)
* $CuCl_2 \cdot 2H_2O$: Copper (II) chloride dihydrate (Kanto Chemical Co., Inc.)
* $Cu(NO_3)_2 \cdot 3H_2O$: Copper (II) nitrate trihydrate (Kanto Chemical Co., Inc.)

The aforementioned OBS12 was synthesized according to the procedure described below.
Synthesis was carried out according to the method described below using as raw materials sodium p-phenolsulfonate (Kanto Chemical Co., Inc., reagent), N,N-dimethylformamide (Kanto Chemical Co., Inc., reagent), lauric acid chloride (Tokyo Chemical Industry Co., Ltd., reagent) and acetone (Kanto Chemical Co., Inc., reagent). 100 g (0.46 mol) of preliminarily dehydrated sodium p-toluenesulfonate were dispersed in 300 g of dimethylformamide followed by dropping in lauric acid chloride over the course of 30 minutes at 50°C while stirring with a magnetic stirrer. After allowing the reaction to proceed for 3 hours following completion of dropping, the dimethylformamide was distilled off under reduced pressure (0.5 mmHg to 1 mmHg) at 100°C followed by washing with acetone and recrystallizing in a mixed solvent of water and acetone (molar ratio: 1/1). The yield was 90%.

<Production Example 1: Preparation of Cleaning Agent Composition Particles>

Cleaning agent composition particles having the composition shown in Table 1 were prepared according to the series of steps indicated below.

[Spray-Drying Step]

Water was placed in a jacketed mixing tank equipped with a stirring device and the temperature was adjusted to 60°C. MES and a surfactant other than a nonionic surfactant were then added thereto and after stirring for 10 minutes, a portion of type A zeolite (amount remaining after excluding that for addition during kneading at 1.0% by weight, that for use as crushing assistant at 5.0% by weight, and that for surface modification at 1.5% by weight in accordance with the added amounts described in Table 1), sodium carbonate, potassium carbonate and anhydrous sodium sulfate were added. Moreover, after stirring for 20 minutes to prepare a slurry for spray-drying having a moisture content of 38% by weight, spray-drying was carried out using a counter-current spray drying tower under conditions of a hot air temperature of 280°C to obtain spray-dried particles having a mean particle diameter (50% by weight) of 320 μm, bulk density of 0.30 g/cm$^3$ and moisture content of 5%.

[Kneading/Mixing Step]

On the other hand, a portion of the nonionic surfactant (amount equal to 25% by weight as MES-Na) was added to an aqueous slurry of MES-Na obtained by sulfonating and neutralizing a raw material fatty acid ester (adjusted to a moisture concentration of 25% by weight) followed by concentrating under reduced pressure with a thin film dryer to a moisture concentration of 11% by weight to obtain a mixed concentrate of MES-Na and ionic surfactant.
The spray-dried particles obtained in the aforementioned spray-drying step, the aforementioned mixed concentrate, 1.0% by weight type A zeolite, remaining nonionic surfactant excluding the nonionic surfactant added during spraying in a surface coating step to be subsequently described and the nonionic surfactant present in the mixed concentrate, and water were placed in a continuous kneader (Model KRC-S4, Kurimoto Ltd.) followed by kneading under conditions of a kneading capacity of 120 kg/hr and temperature of 60°C to obtain a surfactant-containing kneaded product that contained surfactant and had a moisture content of 6% by weight. The surfactant-containing kneaded product was then extruded using a double-stage pelleter (Fuji Paudal Co., Ltd., Model EXBFJS-100) equipped with a die having a hole diameter of 10 mm while cutting with a cutter (cutter circumferential speed: 5 m/s) to obtain pellet-shaped surfactant-containing molded articles having a length of about 5 mm to 30 mm.

[Crushing Step]

Next, an amount equivalent to 5.0% by weight of particulate type A zeolite (mean particle diameter: 180 μm) was added to the resulting pellet-shaped surfactant-containing molded articles followed by crushing using Fitzmill comminutors (Hosokawa Micron Corp., Model DKA-3) arranged in series in three stages (screen hole diameter: 1st stage/2nd stage/3rd stage = 12 mm/6 mm/3 mm, rotating speeds: 4700 rpm for 1st stage, 2nd stage and 3rd stage) in the presence of cold air (10°C, 15 m/s) to obtain a crushed product.

[Surface Coating Step]

Subsequently, the aforementioned surfactant-containing particles and CMC were rotated for 1 minute while spraying with 0.5% by weight of nonionic surfactant and adding the 1.5% by weight type A zeolite for surface modification in a horizontal cylindrical rolling mixer (cylinder diameter: 585 mm, cylinder length: 490 mm, clearance from drum inner walls at inner walls of 131.7 L container: 20 mm, provided with two baffle plates having a height of 45 mm) under conditions of filling rate of 30% by volume, rotating speed of 22 rpm and temperature of 25°C to obtain surface-modified surfactant-containing particles.

[Powder Mixing Step]

The resulting surfactant-containing particles were then transferred by a belt conveyor at a speed of 0.5 m/s (height of surfactant-containing particle layer on belt conveyor: 30 mm, layer width: 300 mm) while feeding enzyme at a constant rate in an amount equivalent to 1.0% by weight to obtain the target cleaning agent composition particles.
Table 1 shows the components of the cleaning agent composition particles obtained via the kneading/mixing step.
[Table 1]

| Component | Incorporated Amount (wt%) |
|---|---|
| MES | 10.0 |

(continued)

| Component | Incorporated Amount (wt%) |
|---|---|
| LAS-Na | 1.0 |
| LAS-K | 0.5 |
| Soap | 5.0 |
| Nonionic surfactant | 4.0 |
| Type A zeolite | 16.0 |
| Potassium carbonate | 5.0 |
| Anhydrous sodium sulfate | 14.5 |
| Enzyme | 1.0 |
| CMC | 1.5 |
| Water | 7.5 |
| Sodium carbonate | 34.0 |
| Total | 100.0 |

<Test Example 1>

A disinfection test for evaluating disinfecting strength against Escherichia coli adhered to a cotton cloth was carried out in compliance with a method such as that of A.N. Petrocci described in the Journal of the Association of Official Analytical Chemists, 52, 836-842 based on the assumption of actual laundering. The following indicates the specific procedure employed in that test.

(Pretreatment of Cotton Cloth)

Unbleached muslin cloth no. 3 (in compliance with JIS L0803) was used for the cotton cloth used in the disinfection test, and the cloth was pretreated in the manner indicated below prior to testing.
5 g each of polysorbate 80 and sodium carbonate were dissolved in water followed by diluting to 1000 ml for use as a wetting agent. 2.5 g of the wetting agent and 2.5 g of sodium carbonate were then dissolved in water to prepare 5 L of washing liquid. The cotton cloth was then placed therein and after boiling for about 1 hour, the washing liquid was replaced with distilled water followed by boiling for about 5 minutes. Moreover, the cotton cloth was agitated for about 5 minutes in 5 L of cold distilled water and allowed to air dry.

(Cutting of Test Cloth)

The pretreated cotton cloth was cut to prepare a cotton cloth measuring 2.5 cm × 3.75 cm and a cotton cloth measuring 5.3 cm × 275 cm.
The 5.3 cm × 275 cm cotton cloth was wrapped around a stainless steel spindle described in the Journal of the Association of Official Analytical Chemists, 52, 837 to obtain a load cloth to allow the weight ratio between the test liquid and the cotton cloth to approach that of actual laundering.
The 2.5 cm × 3.75 cm cotton cloth was used as a test cloth by adding a bacterial liquid according to the method indicated below.
Furthermore, all subsequent procedures were carried out using cloth, water and equipment that had been sterilized for 10 minutes at 121°C.

(Addition of E. Coli Bacterial Liquid)

After drying the test cloth by holding for 1 hour at 110°C in a dry heat sterilizer, 10 μL of physiological saline were applied to the test cloth. Continuing, a mixed liquid of 1.9 mL of an E. coli bacterial liquid adjusted to a viable bacteria count of $5.0 \times 10^8$ to $5.0 \times 10^9$ cfu/mL and 0.1 mL of equine serum (Invitrogen) was prepared, and 20 μL of this mixed liquid were applied to the test cloth.
Three of the test cloths were placed in Petri dishes lined with filter paper, and after holding for 40 minutes in a desiccator

containing silica gel placed inside a thermostatic chamber at 37°C, three test cloths to which the bacterial liquid had been added were inserted between the load cloth wrapped around the spindle.

(Preparation of Disinfectant Composition Aqueous Solution (Treated Liquid))

The cleaning agent composition particles of Table 1 and each of the components indicated in Tables 2A to 7A were added to a glass container followed by the addition of water to bring to a total of 250 g to prepare disinfectant composition aqueous solutions of Examples 1 to 60 and Comparative Examples 1 to 16.
Similarly, the cleaning agent composition particles of Table 1 and each of the components indicated in Tables 2B to 8B were added to a glass container followed by the addition of water to bring to a total of 250 g to prepare disinfectant composition aqueous solutions of Examples 61 to 138 and Comparative Examples 17 to 30.
The incorporated amounts (ppm) of each component in each of the disinfectant composition aqueous solutions are indicated in Tables 2A to 7A and Tables 2B to 8B. The incorporated amounts of each component in the tables indicate values determined as pure substances. The incorporated amounts indicate the weight (mg) of each component contained in 1000 g of the disinfectant composition aqueous solution.
The cleaning agent particles were added in each of the examples so that the incorporated amount in the disinfectant composition aqueous solutions was 620 ppm.

(Disinfection Test)

A load cloth inserted with a test cloth was immersed in a glass container containing a prepared disinfectant composition aqueous solution, a lid was placed on the glass container, and the glass container was mounted on a rotating device (Matsushita Kogyo Co., Ltd.) followed by rotating for 10 minutes at a speed of 60 rotations per minute.
Following completion of testing, the three test cloths were removed with forceps and placed in sterilized plastic bags followed by the addition of 30 mL of SCDLP medium (Soybean-Casein Digest Broth with Lectin and Polysorbate 80, Nihon Pharmaceutical Co., Ltd.) and washing away the test bacteria inoculated into the test cloth for 1 minute with an extractor. 1.0 mL of the extract was sampled and added to 9.0 mL of physiological saline to obtain a 10-fold diluted liquid. This procedure was then repeated to obtain each diluted liquid.
100 μL were sampled from each diluted liquid and added to standard agar medium (Atect Corp.) , and after uniformly coating with a bacterial spreader and incubating for 1 to 2 days in an incubator at 37°C, the number of colonies that formed were counted to determine the total viable bacteria count.

(Evaluation of Disinfecting Strength)

Total viable bacteria count was determined by carrying out the disinfection test in the same manner as described above with the exception of using a 500 ppm aqueous solution of polysorbate 80 as a control sample instead of a disinfectant composition aqueous solution.
On the basis of these results, the logarithmic difference between the viable bacteria count in the case of using each of the disinfectant composition aqueous solutions and the viable bacteria count in the case of using the control sample was calculated in accordance with the following equation (2) for use as an indicator of disinfecting strength. Those results are shown in Tables 2A to 7A and Tables 2B to 8B. The larger the logarithmic difference, the greater the disinfecting strength, and a logarithmic difference of 1.8 or more was judged to indicate the presence of disinfecting effects.

$$\text{Logarithmic difference} = \log_{10}(\text{viable bacteria count when using control sample}) - \log_{10}(\text{viable bacteria count when using disinfectant composition aqueous solution}) \quad (2)$$

[Table 2A]

| Components | | Examples | | | | | | | | |
|---|---|---|---|---|---|---|---|---|---|---|
| | | 1 | 2 | 3 | 4 | 5 | 6 | 7 | 8 | 9 |
| (A) | $ZnSO_4 \cdot 7H_2O$ (Mw=287.54) | 0.63 | 1.0 | 1.3 | 1.3 | 1.3 | 2 | 2.5 | 3 | 4 |
| | As Zn (Mw=65.37) | 0.14 | 0.23 | 0.28 | 0.28 | 0.28 | 0.45 | 0.57 | 0.68 | 0.91 |
| (B) | MGDA (Mw=271.11) | 0.63 | 1 | 1.3 | 1.3 | 1.3 | 2 | 2.5 | 3 | 4 |
| (C) | Sodium percarbonate | 40 | 40 | 40 | 40 | 40 | 40 | 40 | 40 | 40 |
| (D) | OBS12 | 3.5 | 3.5 | 3.5 | 2.3 | 4.6 | 3.5 | 3.5 | 3.5 | 3.5 |
| B/A (molar ratio) | | 1.1 | 1.1 | 1.1 | 1.1 | 1.1 | 1.1 | 1.1 | 1.1 | 1.1 |
| Disinfecting strength (log difference) | | 1.8 | 2.0 | 2.3 | 2.0 | 2.4 | 2.5 | 2.6 | 3.1 | 3.2 |

| Components | | Examples | | | | Comparative Examples | | | |
|---|---|---|---|---|---|---|---|---|---|
| | | 10 | 11 | 12 | 13 | 1 | 2 | 3 | 4 |
| (A) | $ZnSO_4 \cdot 7H_2O$ (Mw=287.54) | 5.0 | 10 | 20 | 30 | 2.5 | 2.5 | 2.5 | |
| | As Zn (Mw=65.37) | 1.1 | 2.3 | 4.5 | 6.8 | 0.57 | 0.57 | 0.57 | |
| (B) | MGDA (Mw=271.11) | 5.0 | 10 | 20 | 30 | 2.5 | | 2.5 | |
| (C) | Sodium percarbonate | 40 | 40 | 40 | 40 | | 40 | 40 | 40 |
| (D) | OBS12 | 3.5 | 3.5 | 3.5 | 3.5 | 3.5 | 3.5 | | 3.5 |
| B/A (molar ratio) | | 1.1 | 1.1 | 1.1 | 1.1 | 1.1 | | 1.1 | |
| Disinfecting strength (log difference) | | 2.8 | 2.3 | 2.1 | 1.8 | 0.2 | 1.6 | 0.3 | 1.5 |

[Table 3A]

| Components | | Examples | | | | | | | | |
|---|---|---|---|---|---|---|---|---|---|---|
| | | 14 | 15 | 16 | 17 | 18 | 19 | 20 | 21 | 22 |
| (A) | $ZnSO_4 \cdot 7H_2O$ (Mw=287.54) | 2.5 | 2.5 | 2.5 | 2.5 | 2.5 | 2.5 | 2.5 | 2.5 | 2.5 |
| | As Zn (Mw=65.37) | 0.57 | 0.57 | 0.57 | 0.57 | 0.57 | 0.57 | 0.57 | 0.57 | 0.57 |
| (B) | MGDA (Mw=271.11) | 0.3 | 0.41 | 1.3 | 1.4 | 1.6 | 2.0 | 3.0 | 4.0 | 6.0 |
| (C) | Sodium percarbonate | 40 | 40 | 40 | 40 | 40 | 40 | 40 | 40 | 40 |
| (D) | OBS12 | 3.5 | 3.5 | 3.5 | 3.5 | 3.5 | 3.5 | 3.5 | 3.5 | 3.5 |
| B/A (molar ratio) | | 0.13 | 0.17 | 0.55 | 0.59 | 0.68 | 0.85 | 1.3 | 1.7 | 2.5 |
| Disinfecting strength (log difference) | | 1.8 | 2.0 | 2.5 | 2.9 | 2.8 | 2.8 | 2.2 | 2.0 | 1.8 |

[Table 4A]

| Components | | Examples | | | | | | | | | | | Comp. Examples | | |
|---|---|---|---|---|---|---|---|---|---|---|---|---|---|---|---|
| | | 23 | 24 | 25 | 26 | 27 | 28 | 29 | 30 | 31 | 32 | 33 | 5 | 6 | 7 |
| (A) | $ZnSO_4 \cdot 7H_2O$ (Mw=287.54) | | | | 2 . 5 | | 2 . 5 | 2 . 5 | 2 . 5 | 2 . 5 | 2 . 5 | 2 . 5 | 2 . 5 | | |
| | As Zn (Mw=65.37) | | | | 0.57 | | 0.57 | 0.57 | 0.57 | 0.57 | 0.57 | 0.57 | 0.57 | | |
| | $ZnSO_4 \cdot H_2O$ (Mw=179.45) | 1.6 | | | | 1.6 | | | | | | | | | |
| | As Zn (Mw=65.37) | 0.57 | | | | 0.57 | | | | | | | | | |
| | $ZnCl_2$ (Mw=136.28) | | 1.2 | | | | | | | | | | | | |
| | As Zn (Mw=65.37) | | 0.57 | | | | | | | | | | | | |
| | $Zn(NO_3)_2 \cdot 6H_2O$ (Mw=297.48) | | | 2.6 | | | | | | | | | | | |
| | As Zn (Mw=65.37) | | | 0.57 | | | | | | | | | | | |
| (B) | MGDA(Mw=271.11) | 1.6 | 1.6 | 1.6 | 1.6 | 1.6 | 1.6 | | | | | | | | |
| | IDS(Mw=336.09) | | | | | | | 2.0 | | | | | | | |
| | HIDS (Mw=352.09) | | | | | | | | 2.1 | | | | | | |
| | GLDA(Mw=351.10) | | | | | | | | | 2.1 | | | | | |
| | ASDA(Mw=337.10) | | | | | | | | | | 2.0 | | | | |
| | NTA(Mw=257.08) | | | | | | | | | | | 1.5 | | | |
| | EDTA(Mw=380.17 | | | | | | | | | | | | 2.2 | | |
| | Sodium percarbonate | 40 | 40 | 40 | 40 | 40 | 40 | 40 | 40 | 40 | 40 | 40 | 40 | 40 | 40 |
| | OBS12 | 3.5 | 3.5 | 3.5 | | | | 3.5 | 3.5 | 3.5 | 3.5 | 3.5 | 3.5 | | |
| | OBC10 | | | | 3.5 | 3.5 | | | | | | | | 3.5 | |
| | TAED | | | | | | 3.5 | | | | | | | | 3.5 |
| B/A (molar ratio) | | 0.68 | 0.68 | 0.68 | 0.68 | 0.68 | 0.68 | 0.98 | 1.1 | 1.1 | 0.99 | 0.58 | 1.3 | | |
| Disinfecting strength (log difference) | | 2.8 | 2.7 | 2.7 | 3.1 | 3.0 | 2.0 | 2.6 | 2.6 | 2.3 | 2.2 | 1.9 | 1.5 | 1.6 | 1.0 |

[Table 5A]

| Components | | Examples | | | | | | | | | | | | | | | |
|---|---|---|---|---|---|---|---|---|---|---|---|---|---|---|---|---|---|
| | | 34 | 35 | 36 | 37 | 38 | 39 | 40 | 41 | 42 | 43 | 44 | 45 | 46 | 47 | 48 | 49 |
| (A) | $ZnSO_4 \cdot 7H_2O$ (Mw=287.54) | 2.5 | 2.5 | 0.1 | 0.31 | 0.63 | 1.3 | 2.5 | 3 | 5 | 1.3 | 0.31 | 2.5 | 1.3 | 1.3 | 1.3 | 1.3 |
| | As Zn (Mw=65.37) | 0.57 | 0.57 | 0.023 | 0.071 | 0.14 | 0.28 | 0.57 | 0.68 | 1.1 | 0.3 | 0.071 | 0.57 | 0.28 | 0.28 | 0.28 | 0.28 |
| (B) | MGDA (Mw=271.11) | 0.13 | 0.19 | 0.10 | 0.19 | 0.75 | 2.4 | 0.75 | 0.75 | 0.75 | 0.75 | 0.19 | 0.38 | 0.75 | 0.75 | 0.75 | 0.75 |
| (C) | Sodium percarbonate | 40 | 40 | 40 | 40 | 40 | 40 | 40 | 40 | 40 | 40 | 40 | 40 | 40 | 40 | 40 | 40 |
| (D) | OBS12 | | | 2.3 | | 2.3 | 2.3 | 2.3 | 2.3 | 2.3 | 2.3 | 2.3 | 2.3 | 2.3 | 2.3 | 2.3 | 2.3 |
| | OBC10 | 2.3 | 2.3 | | 2.3 | | | | | | | | | | | | |
| | TAED | | | | | | | | | | | | | | | | |
| (E) | $CuSO_4 \cdot 5H_2O$ (Mw=249.68) | 0.013 | 0.013 | 0.013 | 0.013 | 0.05 | 0.05 | 0.05 | 0.05 | 0.05 | 0.008 | 0.013 | 0.025 | 0.05 | 0.1 | 0.25 | 0.5 |
| | As Cu (Mw=63.54) | .0033 | .0033 | .0033 | .0033 | 0.013 | 0.013 | 0.013 | 0.013 | 0.013 | .0020 | .0033 | .0064 | 0.013 | 0.025 | 0.064 | 0.13 |
| B/A (molar ratio) | | 0.055 | 0.081 | 1.1 | 0.64 | 1.3 | 2.0 | 0.32 | 0.27 | 0.16 | 0.61 | 0.64 | 0.16 | 0.64 | 0.64 | 0.64 | 0.64 |
| B/(A+E) (molar ratio) | | 0.055 | 0.08 | 0.92 | 0.61 | 1.2 | 1.9 | 0.31 | 0.26 | 0.16 | 0.61 | 0.61 | 0.16 | 0.61 | 0.58 | 0.52 | 0.44 |
| Disinfecting strength (log difference) | | 1.8 | 2.1 | 1.9 | 2.3 | 2.3 | 1.8 | 2.2 | 2.1 | 1.9 | 1.8 | 2.3 | 2.2 | 2.4 | 2.1 | 2.0 | 1.8 |
| Components | | Examples | | | | Comparative Examples | | | | | | | | | | | |
| | | 50 | 51 | 52 | 53 | 8 | 9 | 10 | 11 | 12 | 13 | 14 | | | | 15 | |
| (A) | $ZnSO_4 \cdot 7H_2O$ (Mw=287.54) | 1.3 | 1.3 | 1.3 | 1.3 | | 1.3 | 1.3 | 1.3 | | | | | | | | |
| | As Zn (Mw=65.37) | 0.28 | 0.28 | 0.28 | 0.28 | | 0.28 | 0.28 | 0.28 | | | | | | | | |

(continued)

| Components | | Examples | | | | Comparative Examples | | | | | | | |
|---|---|---|---|---|---|---|---|---|---|---|---|---|---|
| | | 50 | 51 | 52 | 53 | 8 | 9 | 10 | 11 | 12 | 13 | 14 | 15 |
| (B) | MGDA (Mw=271.11) | 0.75 | 0.75 | 0.75 | 0.75 | 0.75 | 0.75 | | 0.75 | | | | |
| (C) | Sodium percarbonate | 40 | 40 | 40 | 40 | 40 | | 40 | 40 | 40 | 40 | 40 | 40 |
| (D) | OBS12 | | | 4.6 | 6.9 | 2.3 | 2.3 | 2.3 | | 2.3 | | | 6.9 |
| | OBC10 | 2.3 | | | | | | | | | 2.3 | | |
| | TAED | | 2.3 | | | | | | | | | 2.3 | |
| (E) | $CuSO_4 \cdot 5H_2O$ (Mw=249.68) | 0.05 | 0.05 | 0.05 | 0.05 | 0.05 | 0.05 | 0.05 | 0.05 | | | | |
| | As Cu (Mw=63.54) | 0.013 | 0.013 | 0.013 | 0.013 | 0.013 | 0.013 | 0.013 | 0.013 | | | | |
| B/A (molar ratio) | | 0.64 | 0.64 | 0.64 | 0.64 | | 0.64 | | 0.64 | | | | |
| Disinfecting strength (log difference) | | 2.5 | 2.0 | 2.6 | 3.1 | 1.4 | 0.3 | 0.5 | 0.8 | 1.3 | 1.5 | 0.9 | 1.7 |

[Table 6A]

| Components | | Examples | | | | Comp.Ex. |
|---|---|---|---|---|---|---|
| | | 54 | 55 | 56 | 57 | 16 |
| (A) | $ZnSO_4 \cdot 7H_2O$ (Mw=287.54) | 1.3 | 1.3 | 1.3 | 1.3 | 1.3 |
| | As Zn (Mw=65.37) | 0.28 | 0.28 | 0.28 | 0.28 | 0.28 |
| (B) | MGDA(Mw=271.11) | 0.75 | | | | |
| | IDS(Mw=336.09) | | 0.75 | | | |
| | HIDS(Mw=352.09) | | | 0.75 | | |
| | NTA(Mw=257.08) | | | | 0.75 | |
| | EDTA(Mw=380.17) | | | | | 0.75 |
| (C) | Sodium percarbonate | 40 | 40 | 40 | 40 | 40 |
| (D) | OBS12 | 2.3 | 2.3 | 2.3 | 2.3 | 2.3 |
| (E) | $CuSO_4 \cdot 5H_2O$ (Mw=249.68) | 0.05 | 0.05 | 0.05 | 0.05 | 0.05 |
| | As Cu (Mw=63.54) | 0.013 | 0.013 | 0.013 | 0.013 | 0.013 |
| B/A (molar ratio) | | 0.64 | 0.51 | 0.49 | 0.67 | 0.45 |
| Disinfecting strength (log difference) | | 2.4 | 2.2 | 2.2 | 1.9 | 1.0 |

[Table 7A]

| Components | | Examples | | |
|---|---|---|---|---|
| | | 58 | 59 | 60 |
| (A) | $ZnSO_4 \cdot 7H_2O$ (Mw=287.54) | 0.31 | | |
| | As Zn (Mw=65.37) | 0.071 | | |
| | $ZnCl_2$ (Mw=136.28) | | 0.31 | |
| | As Zn (Mw=65.37) | | 0.15 | |
| | $Zn(NO_3)_2 \cdot 6H_2O$ (Mw=297.48) | | | 0.31 |
| | As Zn (Mw=65.37) | | | 0.069 |
| (B) | MGDA (Mw=271.11) | 0.19 | 0.19 | 0.19 |
| (C) | Sodium percarbonate | 40 | 40 | 40 |
| (D) | OBS12 | 2.3 | 2.3 | 2.3 |
| (E) | $CuSO_4 \cdot 5H_2O$ (Mw=249.68) | 0.013 | | |
| | As Cu (Mw=63.54) | 0.0033 | | |
| | $CuCl_2 \cdot 2H_2O$ (Mw=170.48) | | 0.013 | |
| | As Cu (Mw=63.54) | | 0.0048 | |
| | $Cu(NO_3)_2 \cdot 3H_2O$ (Mw=241.6) | | | 0.013 |
| | As Cu (Mw=63.54) | | | 0.0034 |
| B/A (molar ratio) | | 0.64 | 0.31 | 0.67 |
| Disinfecting strength (log difference) | | 2.3 | 2.3 | 2.2 |

[Table 2B]

| Components | | Examples | | | | | | | | | | | | | |
|---|---|---|---|---|---|---|---|---|---|---|---|---|---|---|---|
| | | 61 | 62 | 63 | 64 | 65 | 66 | 67 | 68 | 69 | 70 | 71 | 72 | 73 | 74 |
| (A) | $ZnSO_4 \cdot 7H_2O$ (Mw=287.54) | 0.5 | 1 | 2 | 2.5 | 3 | 4 | 5 | 10 | 20 | 30 | 2 | 5 | 2 | 5 |
| | As Zn (Mw=65.37) | 0.11 | 0.23 | 0.45 | 0.57 | 0.68 | 0.91 | 1.1 | 2.3 | 4.5 | 6.8 | 0.45 | 1.1 | 0.45 | 1.1 |
| (B) | Polymer 1 | 0.5 | 1 | 2 | 2.5 | 3 | 4 | 5 | 10 | 20 | 30 | | | | |
| | Polymer 2 | | | | | | | | | | | 2 | 5 | | |
| | Polymer 3 | | | | | | | | | | | | | 2 | 5 |
| (C) | Sodium percarbonate | 40 | 40 | 40 | 40 | 40 | 40 | 40 | 40 | 40 | 40 | 40 | 40 | 40 | 40 |
| (D) | OBS12 | 3.5 | 3.5 | 3.5 | 3.5 | 3.5 | 3.5 | 3.5 | 3.5 | 3.5 | 3.5 | 3.5 | 3.5 | 3.5 | 3.5 |
| B/A(Zn) (wt. ratio) | | 4.5 | 4.3 | 4.4 | 4.4 | 4.4 | 4.4 | 4.5 | 4.3 | 4.4 | 4.4 | 4.4 | 4.5 | 4.4 | 4.5 |
| Disinfecting strength (log difference) | | 1.8 | 2.0 | 2.2 | 2.4 | 2.6 | 2.7 | 2.5 | 2.1 | 1.9 | 1.8 | 2.1 | 2.4 | 2.1 | 2.2 |

| Components | | Comparative Examples | | | | | |
|---|---|---|---|---|---|---|---|
| | | 17 | 18 | 19 | 20 | 21 | 22 |
| (A) | $ZnSO_4 \cdot 7H_2O$ (Mw=287.54) | 2 | 2 | 2 | 2 | 2 | |
| | As Zn (Mw=65.37) | 0.45 | 0.45 | 0.45 | 0.45 | 0.45 | |
| (B) | Polymer 1 | 2.5 | | | | 2.5 | |
| | Polymer 2 | | 2.5 | | | | |
| | Polymer 3 | | | 2.5 | | | |
| (C) | Sodium percarbonate | | | | 40 | 40 | 40 |
| (D) | OBS12 | 3.5 | | | 3.5 | | 3.5 |
| B/A(Zn) (wt. ratio) | | 5.5 | 5.5 | 5.5 | | 5.5 | |
| Disinfecting strength (log difference) | | 0.3 | 0.3 | 0.2 | 1.6 | 0.7 | 1.5 |

[Table 3B]

| Components | | Examples | | | | | | | | | | | |
|---|---|---|---|---|---|---|---|---|---|---|---|---|---|
| | | 75 | 76 | 77 | 78 | 79 | 80 | 81 | 82 | 83 | 84 | 85 | 86 |
| (A) | $ZnSO_4$, $7H_2O$ (Mw=287.54) | 2.5 | 2.5 | 2.5 | 2.5 | 2.5 | 2.5 | 2.5 | 2.5 | 2.5 | 2.5 | 2.5 | 2.5 |
| | As Zn (Mw=65.37) | 0.57 | 0.57 | 0.57 | 0.57 | 0.57 | 0.57 | 0.57 | 0.57 | 0.57 | 0.57 | 0.57 | 0.57 |
| (B) | Polymer 1 | 0.3 | 0.5 | 1 | 1.5 | 2 | 3 | 4 | 6 | | | | |
| | Polymer 2 | | | | | | | | | 1 | 3 | | |
| | Polymer 3 | | | | | | | | | | | 1 | 3 |
| (C) | Sodium percarbonate | 40 | 40 | 40 | 40 | 40 | 40 | 40 | 40 | 40 | 40 | 40 | 40 |
| (D) | OBS12 | 3.5 | 3.5 | 3.5 | 3.5 | 3.5 | 3.5 | 3.5 | 3.5 | 3.5 | 3.5 | 3.5 | 3.5 |
| B/A(Zn) (wt. ratio) | | 0.53 | 0.88 | 1.8 | 2.6 | 3.5 | 5.3 | 7.0 | 11 | 1.8 | 5.3 | 1.8 | 5.3 |
| Disinfecting strength (log difference) | | 1.8 | 2.1 | 2.3 | 2.5 | 2.6 | 2.2 | 2.0 | 1.8 | 2.1 | 2.2 | 2.0 | 2.0 |

[Table 4B]

| Components | | Examples | | | | | | | | | | | Comparative Examples | | | |
|---|---|---|---|---|---|---|---|---|---|---|---|---|---|---|---|---|
| | | 87 | 88 | 89 | 90 | 91 | 92 | 93 | 94 | 95 | 96 | 97 | 23 | 24 | 25 | 26 |
| (A) | $ZnSO_4 \cdot 7H_2O$ (Mw=287.54) | | | | | | | | 2.5 | 2.5 | | | 2.5 | 2.5 | | |
| | As Zn (Mw=65.37) | | | | | | | | 0.57 | 0.57 | | | 0.57 | 0.57 | | |
| | $ZnSO_4 \cdot H_2O$ (Mw=179.45) | 1.6 | | | 1.6 | | 1.6 | | | | | | | | | |
| | As Zn (Mw=65.37) | 0.57 | | | 0.57 | | 0.57 | | | | | | | | | |
| | $ZnCl_2$ (Mw=136.28) | | 1.2 | | | 1.2 | | | | | 1.2 | 1.2 | | | | |
| | As Zn (Mw=65.37) | | 0.57 | | | 0.57 | | | | | 0.57 | 0.57 | | | | |
| | $Zn(NO_3)_2 \cdot 6H_2O$ (Mw=297.48) | | | 2.6 | | | | 2.6 | | | | | | | | |
| | As Zn (Mw=65.37) | | | 0.57 | | | | 0.57 | | | | | | | | |
| (B) | Polymer 1 | 2.0 | 2.0 | 2.0 | | | | | 2.0 | 2.0 | 2.0 | 2.0 | | | | |
| | Polymer 2 | | | | 2.0 | 2.0 | | | | | | | | | | |
| | Polymer 3 | | | | | | 2.0 | 2.0 | | | | | | | | |
| (C) | Sodium percarbonate | 40 | 40 | 40 | 40 | 40 | 40 | 40 | 40 | 40 | 40 | 40 | 40 | 40 | 40 | 40 |
| (D) | OBS12 | 3.5 | 3.5 | 3.5 | 3.5 | 3.5 | 3.5 | 3.5 | | | | | | | | |
| | OBC10 | | | | | | | | 3.5 | | 3.5 | | 3.5 | | 3.5 | |
| | TAED | | | | | | | | | 3.5 | | 3.5 | | 3.5 | | 3.5 |
| B/A(Zn) (wt. ratio) | | 3.5 | 3.5 | 3.5 | 3.5 | 3.5 | 3.5 | 3.5 | 3.5 | 3.5 | 3.5 | 3.5 | | | | |
| Disinfecting strength (log difference) | | 2.6 | 2.5 | 2.5 | 2.5 | 2.5 | 2.2 | 2.3 | 2.8 | 2.1 | 2.7 | 2.1 | 1.5 | 0.8 | 1.6 | 1.0 |

[Table 5B]

| Components | | Examples | | | | | | | | | | | | Comparative Examples | | | |
|---|---|---|---|---|---|---|---|---|---|---|---|---|---|---|---|---|---|
| | | 98 | 99 | 100 | 101 | 102 | 103 | 104 | 105 | 106 | 107 | 108 | 109 | 27 | 28 | 29 | 30 |
| (A) | $ZnSO_4 \cdot 7H_2O$ (Mw=287.54) | 0.1 | 0.3 | 0.5 | 1 | 2.5 | 3 | 5 | 10 | 0.5 | 3 | 0.5 | 3 | | 1 | 1 | 1 |
| | As Zn (Mw=65.37) | 0.023 | 0.068 | 0.11 | 0.23 | 0.57 | 0.68 | 1.1 | 2.3 | 0.11 | 0.68 | 0.11 | 0.68 | | 0.23 | 0.23 | 0.23 |
| (B) | Polymer 1 | 0.1 | 0.3 | 0.5 | 1 | 2.5 | 3 | 5 | 10 | | | | | 1 | 1 | | 1 |
| | Polymer 2 | | | | | | | | | 0.5 | 3 | | | | | | |
| | Polymer 3 | | | | | | | | | | | 0.5 | 3 | | | | |
| (C) | Sodium percarbonate | 40 | 40 | 40 | 40 | 40 | 40 | 40 | 40 | 40 | 40 | 40 | 40 | 40 | | 40 | 40 |
| (D) | OBS12 | 3.5 | 3.5 | 3.5 | 3.5 | 3.5 | 3.5 | 3.5 | 3.5 | 3.5 | 3.5 | 3.5 | 3.5 | 3.5 | 3.5 | 3.5 | |
| (E) | $CuSO_4 \cdot 5H_2O$ (Mw=249.68) | 0.01 | 0.01 | 0.01 | 0.01 | 0.05 | 0.05 | 0.05 | 0.05 | 0.01 | 0.05 | 0.01 | 0.05 | 0.01 | 0.01 | 0.01 | 0.01 |
| | As Cu (Mw=63.54) | 0.0025 | 0.0025 | 0.0025 | 0.0025 | 0.013 | 0.013 | 0.013 | 0.013 | 0.0025 | 0.013 | 0.0025 | 0.013 | 0.0025 | 0.0025 | 0.0025 | 0.0025 |
| B/A(Zn) (wt. ratio) | | 4.3 | 4.4 | 4.5 | 4.3 | 4.4 | 4.4 | 4.5 | 4.3 | 4.5 | 4.4 | 4.5 | 4.4 | | 4.3 | | 4.3 |
| Disinfecting strength (log difference) | | 1.8 | 2.0 | 2.1 | 2.3 | 2.8 | 2.6 | 2.1 | 1.9 | 2.0 | 2.5 | 2.0 | 2.0 | 1.5 | 0.3 | 0.6 | 0.8 |

[Table 6B]

| Components | | Examples | | | | | | | | | | | |
|---|---|---|---|---|---|---|---|---|---|---|---|---|---|
| | | 110 | 111 | 112 | 113 | 114 | 115 | 116 | 117 | 118 | 119 | 120 | 121 |
| (A) | $ZnSO_4 \cdot 7H_2O$ (Mw=287.54) | 2.5 | 2.5 | 2.5 | 2.5 | 2.5 | 2.5 | 2.5 | 2.5 | 2.5 | 2.5 | 2.5 | 2.5 |
| | As Zn (Mw=65.37) | 0.57 | 0.57 | 0.57 | 0.57 | 0.57 | 0.57 | 0.57 | 0.57 | 0.57 | 0.57 | 0.57 | 0.57 |
| (B) | Polymer 1 | 0.3 | 0.5 | 1 | 1.5 | 2 | 3 | 4 | 6 | | | | |
| | Polymer 2 | | | | | | | | | 1 | 3 | | |
| | Polymer 3 | | | | | | | | | | | 1 | 3 |
| (C) | Sodium percarbonate | 40 | 40 | 40 | 40 | 40 | 40 | 40 | 40 | 40 | 40 | 40 | 40 |
| (D) | OBS12 | 3.5 | 3.5 | 3.5 | 3.5 | 3.5 | 3.5 | 3.5 | 3.5 | 3.5 | 3.5 | 3.5 | 3.5 |
| (E) | $CuSO_4 \cdot 5H_2O$ (Mw=249.68) | 0.05 | 0.05 | 0.05 | 0.05 | 0.05 | 0.05 | 0.05 | 0.05 | 0.05 | 0.05 | 0.05 | 0.05 |
| | As Cu (Mw=63.54) | 0.013 | 0.013 | 0.013 | 0.013 | 0.013 | 0.013 | 0.013 | 0.013 | 0.013 | 0.013 | 0.013 | 0.013 |
| B/A(Zn) (wt. ratio) | | 0.53 | 0.88 | 1.8 | 2.6 | 3.5 | 5.3 | 7.0 | 11 | 1.8 | 5.3 | 1.8 | 5.3 |
| Disinfecting strength (log difference) | | 2.0 | 2.4 | 2.5 | 2.7 | 2.9 | 2.5 | 2.1 | 1.9 | 2.4 | 2.4 | 2.3 | 2.2 |

[Table 7B]

| Components | | Examples | | | | | | |
|---|---|---|---|---|---|---|---|---|
| | | 122 | 123 | 124 | 125 | 126 | 127 | 128 |
| (A) | $ZnSO_4 \cdot 7H_2O$ (Mw=287.54) | 2 . 5 | 2 . 5 | 2 . 5 | 2 . 5 | 2 . 5 | 2 . 5 | 2 . 5 |
| | As Zn (Mw=65.37) | 0.57 | 0.57 | 0.57 | 0.57 | 0.57 | 0.57 | 0.57 |
| (B) | Polymer 1 | 2 | 2 | 2 | 2 | 2 | 2 | 2 |
| (C) | Sodium percarbonate | 40 | 40 | 40 | 40 | 40 | 40 | 40 |
| (D) | OBS12 | 3.5 | 3.5 | 3.5 | 3.5 | 3.5 | 3.5 | 3.5 |
| (E) | $CuSO_4 \cdot 5H_2O$ (Mw=249.68) | 0.0080 | 0.01 | 0.05 | 0.1 | 0.2 | 0.3 | 0.5 |
| | As Cu (Mw=63.54) | 0.002 | 0.0025 | 0.013 | 0.025 | 0.051 | 0.076 | 0.13 |
| B/A(Zn) (wt. ratio) | | 3.5 | 3.5 | 3.5 | 3.5 | 3.5 | 3.5 | 3.5 |
| Disinfecting strength (log difference) | | 2.6 | 2.7 | 2.8 | 2.9 | 2.9 | 2.8 | 2.4 |

[Table 8B]

| Components | | Examples | | | | | | | | | |
|---|---|---|---|---|---|---|---|---|---|---|---|
| | | 129 | 130 | 131 | 132 | 133 | 134 | 135 | 136 | 137 | 138 |
| (A) | $ZnSO_4 \cdot 7H_2O$ (Mw=287.54) | 2.5 | | | | 2.5 | 2.5 | 2.5 | 2.5 | 2.5 | 2.5 |
| | As Zn (Mw=65.37) | 0.57 | | | | 0.57 | 0.57 | 0.57 | 0.57 | 0.57 | 0.57 |
| | $ZnSO_4 \cdot H_2O$ (Mw=179.45) | | 1.6 | | | | | | | | |
| | As Zn (Mw=65.37) | | 0.58 | | | | | | | | |
| | $ZnCl_2$ (Mw=136.28) | | | 1.2 | | | | | | | |
| | As Zn (Mw=65.37) | | | 0.58 | | | | | | | |
| | $Zn(NO_3)_2 \cdot 6H_2O$ (Mw=297.48) | | | | 2.6 | | | | | | |
| | As Zn (Mw=65.37) | | | | 0.57 | | | | | | |
| (B) | Polymer 1 | | | | | 2 | 2 | 2 | | | |
| | Polymer 2 | 1 | 1 | 1 | 1 | | | | | | |
| | Polymer 3 | | | | | | | | 1 | 1 | 1 |
| (C) | Sodium percarbonate | 40 | 40 | 40 | 40 | 40 | 40 | 40 | 40 | 40 | 40 |
| (D) | OBS12 | 3.5 | 3.5 | 3.5 | 3.5 | 3.5 | | | 3.5 | 3.5 | 3.5 |
| | OBC10 | | | | | | 3.5 | | | | |
| | TAED | | | | | | | 3 . 5 | | | |
| (E) | $CuSO_4 \cdot 5H_2O$ (Mw=249.68) | 0.05 | 0.05 | 0.05 | 0.05 | 0.05 | 0.05 | 0.05 | 0.05 | | |
| | As Cu (Mw=63.54) | 0.013 | 0.013 | 0.013 | 0.013 | 0.013 | 0.013 | 0.013 | 0.013 | | |
| | $CuCl_2 \cdot 2H_2O$ (Mw=170.48) | | | | | | | | | 0.034 | |
| | As Cu (Mw=63.54) | | | | | | | | | 0.013 | |
| | $Cu(NO_3)_2 \cdot 3H_2O$ (Mw=241.6) | | | | | | | | | | 0.048 |
| | As Cu (Mw=63.54) | | | | | | | | | | 0.013 |
| B/A(Zn) (wt. ratio) | | 1.8 | 1.7 | 1.7 | 1.8 | 3.5 | 3.5 | 3.5 | 1.8 | 1.8 | 1.8 |
| Disinfecting strength (log difference) | | 2.4 | 2.4 | 2.3 | 2.5 | 2.8 | 2.9 | 2.3 | 2.3 | 2.2 | 2.2 |

The abbreviation "Mw" in Tables 2A to 7A and Tables 2B to 8B refers to molecular weight.

INDUSTRIAL APPLICABILITY

According to the aspects of the present invention, a disinfectant composition and a disinfecting method can be provided that enable the effective elimination of gram negative bacteria adhered to textile products, and particularly cotton products.

## Claims

**1.** A disinfectant composition containing the following components (A) to (D):

component (A): a zinc compound,
component (B): a chelate compound represented by the following general formula (b1) or (b2),
component (C): hydrogen peroxide or a peroxide that releases hydrogen peroxide in water, and
component (D): an organic peroxy acid precursor that generates an organic peroxy acid by reacting with the component (C) :

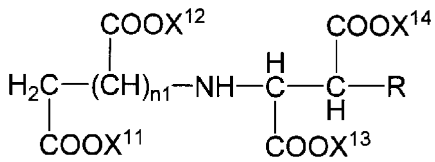

··· (b 1)

(wherein, $X^{11}$ to $X^{14}$ respectively and independently represent a hydrogen atom, alkaline metal, alkaline earth metal or cationic ammonium, R represents a hydrogen atom or hydroxyl group, and n1 represents an integer of 0 or 1);

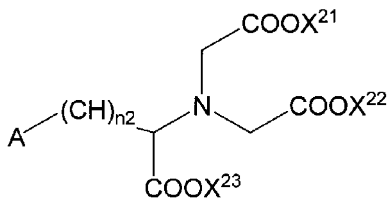

··· (b 2)

(wherein, A represents an alkyl group, carboxyl group, sulfo group, amino group, hydroxyl group or hydrogen atom, $X^{21}$ to $X^{23}$ respectively and independently represent a hydrogen atom, alkaline metal, alkaline earth metal or cationic ammonium, and n2 represents an integer of 0 to 5).

**2.** A disinfectant composition containing the following components (A) to (D):

component (A): a zinc compound,
component (B) : at least one type of compound selected from the group consisting of polyethyleneimine, a polymer having a constituent unit represented by the following general formula (I) and a polymer having a constituent unit represented by the following general formula (II),
component (C): hydrogen peroxide or a peroxide that releases hydrogen peroxide in water, and
component (D): an organic peroxy acid precursor that generates an organic peroxy acid by reacting with the component (C) :

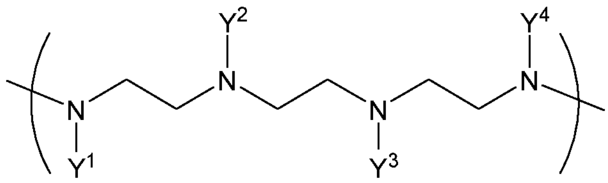

(I)

(wherein, $Y^1$ to $Y^4$ respectively and independently represent a hydrogen atom, alkyl group, a group represented by the general formula - $(CH_2)_m-X^1$ (wherein, $X^1$ represents a primary amino group, secondary amino group, tertiary amino group, amido group or hydroxyl group, and the second amino group, the tertiary amino group and the amido group may have as a substituent $-COOX^{11'}$ (wherein, $X^{11'}$ represents a hydrogen atom or salt-forming cation), and m represents 1 or 2) or a group represented by the general formula - $(CH_2)_n-COOX^2$ (wherein, $X^2$ represents a hydrogen atom or salt-forming cation, and n represents 1 or 2), and at least one of $Y^1$ to $Y^4$ is a group represented by the general formula $-(CH_2)_m-X^1$ and in which $X^1$ in the formula is a secondary amino group, tertiary amino group or amido group having the $-COOX^{11'}$ as a substituent, or a group represented by the general formula - $(CH_2)_n-COOX^2$);

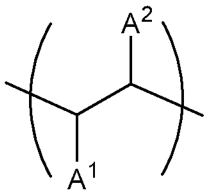

(II)

(wherein, $A^1$ and $A^2$ respectively and independently represent a hydrogen atom, alkyl group, a group represented by the general formula - $(CH_2)_p-X^3$ (wherein, $X^3$ represents a primary amino group, secondary amino group, tertiary amino group, amido group or hydroxyl group, and the secondary amino group, the tertiary amino group and the amido group may have as a substituent $-COOX^{31}$ (wherein, $X^{31}$ represents a hydrogen atom or salt-forming cation) and p represents an integer of 0 to 2) or a group represented by the general formula - $(CH_2)_q-COOX^4$ (wherein, $X^4$ represents a hydrogen atom or a salt-forming cation, and q represents an integer of 0 to 2), and at least one of $A^1$ and $A^2$ is group represented by the general formula - $(CH_2)_p-X^3$ in which $X^3$ in the formula is a secondary amino group, tertiary amino group or amido group having as a substituent $-COOX^{31}$ or a group represented by the general formula $-(CH_2)_q-COOX^4$).

**3.** The disinfectant composition according to claim 1 further comprising the following component (E):

component (E): a copper compound.

**4.** The disinfectant composition according to claim 3, wherein the molar ratio (B)/(A) of the component (B) to the component (A) is within the range of 0.05 to 2.

**5.** The disinfectant composition according to claim 3 or 4, which is used by being contained in water so that the Zn concentration is 0.02 ppm to 1.1 ppm and the Cu concentration is 0.002 ppm to 0.13 ppm.

**6.** The disinfectant composition according to claim 1, wherein the following component (E) is not contained and the molar ratio (B)/(A) of the component (B) to the component (A) is within the range of 0.1 to 2.5:

component (E): a copper compound.

**7.** The disinfectant composition according to claim 6, which is used by being contained in water so that the Zn concentration is 0.1 ppm to 7 ppm.

**8.** The disinfectant composition according to claim 2, wherein the weight ratio of the component (B) to Zn derived from the component (A) is within the range of 0.5 to 12.

**9.** The disinfectant composition according to claim 2 or 8, which is used by being contained in water so that the Zn

concentration is 0.1 ppm to 7 ppm.

**10.** The disinfectant composition according to claim 2 or 8, further comprising the following component (E):

component (E): a copper compound.

**11.** The disinfectant composition according to claim 10, which is used by being contained in water so that the Zn concentration is 0.02 ppm to 2.5 ppm and the Cu concentration is 0.002 ppm to 0.15 ppm.

**12.** The disinfectant composition according to any one of claims 1 to 11, wherein the component (D) is represented by the following general formula (d1):

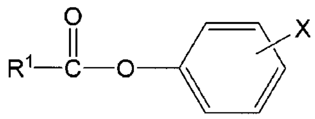

··· (d 1)

(wherein, $R^1$ represents a linear aliphatic hydrocarbon group having 7 to 18 carbon atoms, and X represents a hydrogen atom, -COOM or $-SO_3M$ (wherein, M represents a hydrogen atom or salt-forming cation).

**13.** A disinfecting method comprising contacting the disinfectant composition according to any one of claims 1 to 12 with a textile product in water.

**INTERNATIONAL SEARCH REPORT**

International application No.
PCT/JP2010/065292

A. CLASSIFICATION OF SUBJECT MATTER
*A01N59/16*(2006.01)i, *A01N37/40*(2006.01)i, *A01N37/44*(2006.01)i, *A01N41/04*(2006.01)i, *A01N59/00*(2006.01)i, *A01N59/20*(2006.01)i, *A01P3/00*(2006.01)i, *C11D7/10*(2006.01)i, *C11D7/18*(2006.01)i, *C11D7/26*(2006.01)i,

According to International Patent Classification (IPC) or to both national classification and IPC

B. FIELDS SEARCHED

Minimum documentation searched (classification system followed by classification symbols)
A01N59/16, A01N37/40, A01N37/44, A01N41/04, A01N59/00, A01N59/20, A01P3/00, C11D7/10, C11D7/18, C11D7/26, C11D7/32, C11D7/34

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
JSTPlus/JMEDPlus/JST7580(JDreamII)

C. DOCUMENTS CONSIDERED TO BE RELEVANT

| Category* | Citation of document, with indication, where appropriate, of the relevant passages | Relevant to claim No. |
|---|---|---|
| A | JP 2009-155292 A (Lion Corp.), 16 July 2009 (16.07.2009), claims 1 to 4 (Family: none) | 1-13 |
| A | JP 2009-148682 A (Lion Corp.), 09 July 2009 (09.07.2009), claims 1 to 3 (Family: none) | 1-13 |
| A | JP 2009-148683 A (Lion Corp.), 09 July 2009 (09.07.2009), claims 1 to 4 (Family: none) | 1-13 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>30 September, 2010 (30.09.10) | Date of mailing of the international search report<br>12 October, 2010 (12.10.10) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2010/065292

C (Continuation). DOCUMENTS CONSIDERED TO BE RELEVANT

| Category* | Citation of document, with indication, where appropriate, of the relevant passages | Relevant to claim No. |
|---|---|---|
| A | JP 10-72596 A (Lion Corp.),<br>17 March 1998 (17.03.1998),<br>claim 1; table 1<br>(Family: none) | 1-13 |
| A | JP 10-279412 A (Lion Corp.),<br>20 October 1998 (20.10.1998),<br>claim 1; paragraphs [0011], [0015], [0016]<br>(Family: none) | 1-13 |
| A | JP 2002-529545 A (Universite de Montreal),<br>10 September 2002 (10.09.2002),<br>claims 1, 13, 15<br>& US 2002/0016278 A1 & EP 1124584 A<br>& WO 2000/027438 A1 | 1-13 |
| P,A | JP 2009-235058 A (Lion Corp.),<br>15 October 2009 (15.10.2009),<br>claims 1 to 3<br>& WO 2009/110590 A1 | 1-13 |

Form PCT/ISA/210 (continuation of second sheet) (July 2009)

INTERNATIONAL SEARCH REPORT

International application No.
PCT/JP2010/065292

Continuation of A. CLASSIFICATION OF SUBJECT MATTER
(International Patent Classification (IPC))

*C11D7/32*(2006.01)i, *C11D7/34*(2006.01)i

(According to International Patent Classification (IPC) or to both national classification and IPC)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009205912 A
- JP 2010161754 A
- JP 2010197580 A
- JP 2010197581 A
- JP 2009148682 A
- JP 2009148683 A
- JP 2009235058 A
- JP 2009155292 A
- JP 2918991 B
- JP 2871298 B
- JP S59196399 B
- US 4526698 A
- JP H431498 B
- JP H640709 B
- JP H7118003 B
- JP H5125400 B
- JP H5209200 B
- JP H987691 B
- JP 2002146399 A
- JP 2003089800 A
- JP H525492 B
- JP S63264699 B
- JP H3186307 B


### Non-patent literature cited in the description


- **A.N. Petrocci.** *Journal of the Association of Official Analytical Chemists,* vol. 52, 836-842